(19) Europäisches Patentamt
European Patent Office
Office européen des brevets

(11) **EP 2 630 515 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(21) Anmeldenummer: **11769845.6**

(22) Anmeldetag: **07.10.2011**

(51) Int Cl.:
*G01S 19/51* (2010.01)     *G01S 19/44* (2010.01)

(86) Internationale Anmeldenummer:
**PCT/EP2011/067554**

(87) Internationale Veröffentlichungsnummer:
**WO 2012/052307 (26.04.2012 Gazette 2012/17)**

(54) **VERFAHREN UND VORRICHTUNG ZUR BESTIMMUNG DER RELATIVPOSITION ZWISCHEN ZWEI EMPFÄNGERN UND VERWENDUNG DER VORRICHTUNG ZUR STABILISIERUNG SCHWEBENDER LASTEN**

METHOD AND APPARATUS FOR DETERMINING THE RELATIVE POSITION BETWEEN TWO RECEIVERS AND USE OF THE APPARATUS FOR STABILIZING SUSPENDED LOADS

PROCÉDÉ ET DISPOSITIF POUR DÉTERMINER LA POSITION RELATIVE ENTRE DEUX RÉCEPTEURS ET UTILISATION DU DISPOSITIF POUR STABILISER DES CHARGES OSCILLANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2010 DE 102010038257**

(43) Veröffentlichungstag der Anmeldung:
**28.08.2013 Patentblatt 2013/35**

(73) Patentinhaber: **ANavS GmbH**
**80686 München (DE)**

(72) Erfinder:
• **HENKEL, Patrick**
**82275 Emmering (DE)**
• **JURKOWSKI, Patryk**
**92245 Kümmersbruck (DE)**

(74) Vertreter: **Herrmann, Franz**
**Dendorfer & Herrmann**
**Patentanwälte Partnerschaft mbB**
**Neuhauser Straße 47**
**80331 München (DE)**

(56) Entgegenhaltungen:
EP-A1- 1 868 008     EP-A1- 1 972 959
WO-A1-98/37433     GB-A- 2 429 128

• **SHENGLIN FAN, KEFEI ZHANG, FALIN WU: "Ambiguity Resolution in GPS-based, Low-cost Attitude Determination", JOURNAL OF GLOBAL POSITIONING SYSTEMS (GPS), [Online] Bd. 4, Nr. 1-2, 1. Dezember 2005 (2005-12-01), Seiten 207-214, XP002667742, Australia ISSN: 1446-3156 Gefunden im Internet: URL:http://www.gmat.unsw.edu.au/wang/jgps/ v4n12/v4n12p26.pdf> [gefunden am 2012-01-20]**
• **GIORGI G., TEUNISSEN P., VERHAGEN S.: "Reducing the Time-To-Fix for Stand-Alone Single Frequency GNSS Attitude Determination", PROC. OF INTERN. TECHN. MEETING OF THE INST. OF NAVIGATION (ION-ITM, Januar 2010 (2010-01), XP002667741, in der Anmeldung erwähnt**
• **M.L.PSIAKI, S. MOHIUDDIN: "Relative Navigation of High-Altitude SpacecraftUsing Dual-Frequency Civilian CDGPS", PROCEEDINGS OF THE 18TH INTERNATIONAL TECHNICAL MEETING OF THE SATELLITE DIVISION OF THE INSTITUTE OF NAVIGATION (ION GNSS 2005), 16. September 2005 (2005-09-16), Seiten 1191-1207, XP002667751, U.S.A.**

EP 2 630 515 B1

**Beschreibung**

Verfahren und Vorrichtung zur Bestimmung der Relativposition zwischen zwei Empfängern und Verwendung der Vorrichtung zur Stabilisierung schwebender Lasten.

Die Erfindung betrifft ein Verfahren zur Bestimmung der Relativpositionen zwischen zwei Empfängern für die Satellitennavigation, bei dem von den Empfängern Phasenmessungen an den Trägersignalen des Satellitennavigationssystems durchgeführt werden und von einer Auswerteeinheit anhand der Code- und Phasenmessungen die Relativposition der Empfänger bestimmt wird.

Die Erfindung betrifft ferner eine Vorrichtung zur Bestimmung einer Relativposition zwischen zwei Empfängern sowie eine Verwendung der Vorrichtung zur Stabilisierung schwebender Lasten.

Aus der Veröffentlichung SHENGLIN FAN, KEFEI ZHANG, FALIN WU: Ambiguity Resolution in GPS-based Low-cost Attitude Determination, Journal of Global Positioning Systems, Bd. 4, Nr. 1-2, Seiten 207- 214 ist ein Verfahren bekannt, bei dem mit Hilfe eines Satelliten gestützten Navigationssystems die Orientierung eines Abstandsvektors bestimmt wird. Dazu werden Phasenmessungen durchgeführt und die Phasenmehrdeutigkeiten bestimmt. In einem ersten Verfahrensschritt werden reelwertige Lösungen für die Phasenmehrdeutigkeiten mit Hilfe eines Kalman-Filters bestimmt. In einem zweiten Verfahrensschritt werden die ganzzahligen Mehrdeutigkeiten gesucht, indem eine Bewertungsfunktion minimiert wird. Zu diesem Zweck werden die reelwertigen Lösungen und die Varianzmatrix der Bewertungsfunktion einer Transformation unterzogen, durch die die reelwertigen Lösungen dekorreliert werden. Anschließend wird eine iterative Suche nach dem Minimum der transformierten Bewertungsfunktion durchgeführt und die gefundene Lösung rücktransformiert. Im dritten Verfahrensschritt wird die gefundene Lösung validiert, indem unter anderem zu der gefundenen Lösung der ganzzahligen Phasenmehrdeutigkeiten die Länge des zugehörigen Abstandsvektors bestimmt wird und mit der vorbekannten Länge verglichen wird. Die Lösung wird akzeptiert, wenn der Betrag der Längendifferenz, unterhalb einer frei gewählten, vorbestimmten Obergrenze liegt.

Die GB 2 429 128 A beschreibt ein Verfahren um die Orientierung eines Abstandsvektors beim Start eines Navigationsgeräts möglich schnell zu bestimmen. Zu diesem Zweck wertet das Navigationsgerät die Messwerte von Trägheitssensoren aus. Insbesondere werden von einem Phasenmehrdeutigkeitsschätzer bestimmte Phasenmehrdeutigkeiten in einem Phasenmehrdeutigkeitsprüfer überprüft. In einem der Verfahrensschritte wird die Länge des Abstandsvektors berechnet, der den gefundenen Phasenmehrdeutigkeiten zugeordnet ist. Diese Länge wird mit der vorbekannten festen Länge verglichen. In einem weiteren Verfahrensschritt wird ferner auch die Ausrichtung des berechneten Abstandsvektors mit der Ausrichtung verglichen, die sich anhand der Trägheitssensoren ergibt.

Die bekannten Verfahren setzen eine genaue Kenntnis der Länge des Abstandsvektors voraus.

Aus der Veröffentlichung GIORGI G., TEUNISSEN P., VERHAGEN S.: Reducing the Time-To-Fix for Stand-Alone Single Frequency GNSS Attitude Determination", Proc. of Intern. Techn. Meeting of the Inst. of Navigation (ION-ITM), San Diego, Januar 2010 ist ein Verfahren zur Bestimmung der Relativposition zwischen zwei Empfängern bekannt. Die Bestimmung eines den Relativabstand zwischen den Empfängern beschreibenden Abstandsvektors läuft letztlich auf die Lösung eines Minimierungsproblems im Rahmen der Methode der kleinsten Quadrate hinaus. Die Lösung für den Abstandsvektor soll dabei unter der Nebenbedingung gefunden werden, dass die Länge des Abstandsvektors einen vorbestimmten Wert hat. In dem bekannten Verfahren wird nun der Abstandsvektor in Polarkoordinaten dargestellt. Dies führt jedoch zu starken Nichtlinearitäten bezüglich der Winkel der Polarkoordinaten, die dadurch behoben werden, dass der Abstandsvektor in eine ursprüngliche Schätzung und einer linear mit den Winkeln skalierenden Abweichung zerlegt wird. Damit kann das bezüglich der Winkel der Polarkoordinaten nichtlineare Gleichungssystem linearisiert und mit herkömmlichen Methoden gelöst werden.

Ein Nachteil des bekannten Verfahrens ist, dass die Linearisierung nur dann vorgenommen werden kann, wenn der anfängliche Abstandsvektor mit hinreichender Genauigkeit bestimmt werden kann. Das trifft dann zu, wenn die Länge des Abstandsvektors wesentlich größer als der Fehler bei der anfänglichen absoluten Bestimmung der Positionen der beiden Empfänger ist. Falls der Abstandsvektor eine Länge größer 100 Meter hat, ist das in der Regel der Fall.

TEUNISSEN, P.: Least-squares estimation of the integer ambiguities, Invited lecture, Section IV, Theory and Methodology, IAG General Meeting, Beijing, China, 1993 beschreibt verschiede Verfahren zur Auflösung von Phasenmehrdeutigkeiten.

TEUNISSEN, P.: The least-squares ambiguity decorrelation adjustment: a method for fast GPS ambiguity estimation, J. of Geodesy, Band 70, Seiten 65-82, 1995 beschreibt ein Dekorrelationsverfahren zur Auflösung von Phasenmehrdeutigkeiten.

HENKEL, P.: Bootstrapping with Multi-Frequency Mixed Code Carrier Linear Combinations and Partial Integer Decorrelation in the Presence of Biases, Proc. of the IAG Scient. Assembly, Buenos Aires, Argentina, September 2009 untersucht Code- und Phasenkombinationen zur Verbesserung der Auflösung von Phasenmehrdeutigkeiten.

Aus der EP 1 972 959 A1 sind verschiedene Verfahren zur Auflösung von Phasenmehrdeutigkeiten von Linearkombination von Trägersignalen eines Satellitennavigationssystems bekannt.

Aus der WO 2009/125011 ist ferner ein Verfahren zum Verfolgen von Phasen (= phase tracking) einer Vielzahl von Trägersignalen bekannt.

Ausgehend von diesem Stand der Technik liegt der Erfindung daher die Aufgabe zugrunde, ein verbessertes Verfahren zur Bestimmung der Relativposition zweier Empfänger eines Satellitennavigationssystems zu schaffen.

Diese Aufgabe wird durch eine Vorrichtung mit den Merkmalen des unabhängigen Anspruchs gelöst. In davon abhängigen Ansprüchen sind vorteilhafte Ausgestaltungen und Weiterbildungen angegeben.

Bei dem Verfahren werden von der Auswerteeinheit die ganzzahligen Phasenmehrdeutigkeiten und der die Relativposition beschreibende Abstandsvektor bestimmt, indem eine Bewertungsfunktion minimiert wird, die neben einem ersten Maß zur Bewertung der der Konsistenz der ganzzahligen Phasenmehrdeutigkeiten mit den Phasenmessungen ein zweites Maß beinhaltet, durch das die Abweichung des die Relativposition beschreibenden Abstandsvektors, der den ganzzahligen Phasenmehrdeutigkeiten zugeordnet ist und dessen Länge nicht vorbestimmt ist, von einem Abstandsvektor vorbestimmter Länge bestimmt wird. Bei diesem Verfahren wird somit derjenige Abstandsvektor bestimmt, der einerseits mit bekannten Vorwissen bezüglich des Abstandsvektors möglichst gut übereinstimmt und der andererseits mit Phasenmehrdeutigkeiten verknüpft ist, die möglichst mit den Phasenmessungen konsistent sind. Mit einem derartigen Verfahren kann die Relativposition der beiden Empfänger auch dann bestimmt werden, wenn der Fehler bei der Bestimmung der Absolutposition der Empfänger in Anbetracht des Abstands zwischen den Empfängern nicht vernachlässigbar ist.

Bei einer Ausgestaltung des Verfahrens werden zunächst die reellwertigen Phasenmehrdeutigkeiten bestimmt und dann die ganzzahligen Phasenmehrdeutigkeiten und der die Relativposition beschreibende Abstandsvektor bestimmt, indem die Bewertungsfunktion optimiert wird. Das erste Maß der Bewertungsfunktion umfasst dabei eine Norm, mit der die Abweichung der reellwertigen Phasenmehrdeutigkeiten von den ganzzahligen Phasenmehrdeutigkeiten bestimmt werden kann. Das zweite Maß umfasst ferner eine Norm, mit der die Abweichung des Abstandsvektors, der den ganzzahligen Phasenmehrdeutigkeiten zugeordnet ist und dessen Länge nicht vorbestimmt ist, von dem Abstandsvektor vorbestimmter Länge bestimmt wird. Mit diesem Verfahren wird somit derjenige Abstandsvektor gesucht, dessen zugehörige ganzzahlige Phasenmehrdeutigkeiten möglichst nahe an dem reellwertigen Phasenmehrdeutigkeiten liegen, und der mit einem vorbestimmten Abstandsvektor möglichst genau übereinstimmt. Mit diesem Verfahren lässt sich der Abstandsvektors auch ohne präzise Vorkenntnisse hinsichtlich der Richtung des Abstandvektors genau bestimmen.

Die Genauigkeit bei der Bestimmung des Abstandsvektors lässt sich weiter verbessern, wenn zusätzlich gefordert wird, dass der zu bestimmende Abstandsvektor eine vorbekannte Länge aufweisen muss. Dies lässt sich beispielsweise bewerkstelligen, indem mithilfe einer Suchbewertungsfunktion derjenige Abstandsvektor gesucht wird, der eine vorbestimmte Länge aufweist und den geringsten Abstand zu dem Abstandsvektor aufweist, der den ganzzahlige Phasenmehrdeutigkeiten zugeordnet ist und dessen Länge nicht vorbestimmt ist. In diesem zweistufigen Verfahren werden in einem ersten Verfahrensabschnitt zunächst die reellwertigen Phasenmehrdeutigkeiten geschätzt und Kandidaten für die ganzzahligen Phasenmehrdeutigkeiten gesucht, die innerhalb der Fehlergrenzen der reellwertigen Phasenmehrdeutigkeit liegen. In einem zweiten Verfahrensabschnitt wird nun der Abstandsvektor zu einem ausgewählten Kandidaten für die ganzzahlige Phasenmehrdeutigkeit bestimmt und ein weiterer Abstandsvektor der vorbekannten Länge gesucht und zwar derart, dass mit Hilfe der Suchbewertungsfunktion derjenige Abstandsvektor gesucht wird, der die vorbekannte Länge aufweist und den geringsten Abstand zu dem den ganzzahligen Phasenmehrdeutigkeiten zugeordneten Abstandsvektor mit nicht vorbestimmter Länge aufweist. Sobald der gesuchte Abstandsvektor zu einem bestimmten Abstandsvektor konvergiert ist, kann die Bewertungsfunktion ausgewertet werden. Der zweite Verfahrensabschnitt wird für alle Kandidaten der ganzzahligen Phasenmehrdeutigkeiten wiederholt. Unter allen Kandidaten für die ganzzahligen Phasenmehrdeutigkeiten wird dann derjenige Vektor der ganzzahligen Phasenmehrdeutigkeiten als Optimum ausgewählt, der zusammen mit dem zugehörigen Abstandsvektor die Bewertungsfunktion minimiert.

Die Suchbewertungsfunktion kann eine Lagrangefunktion sein, die eine bestimmte Länge des den ganzzahligen Phasenmehrdeutigkeiten zugeordneten Abstandsvektors erzwingt.

Bei einer alternativen Ausgestaltung des Verfahrens umfasst das erste Maß zur Bewertung der ganzzahligen Phasenmehrdeutigkeiten eine Norm, durch die die Abweichung der gemessenen Code- und Phasenwerte von berechneten Code- und Phasenwerten bestimmt wird. Die berechneten Code- und Phasenwerte sind anhand der ganzzahligen Phasenmehrdeutigkeiten und dem Abstandsvektor berechnet worden. Die gemessenen Code- und Phasenwerte sind dagegen bei den Code- und Phasenmessungen in den Regelkreisen des Empfängers (phase lock loop, delay lock loop) erfasst worden. Bei der abgewandelten Ausführungsform des Verfahrens umfasst das zweite Maß der Bewertungsfunktion ferner die Abweichung einer Norm des Abstandsvektors von einer vorbestimmten Länge. Auch mit diesem Verfahren lässt sich die Relativposition der beiden Empfänger mit großer Genauigkeit bestimmen, selbst wenn die Fehler bei der Bestimmung der absoluten Position der Empfänger gegenüber dem Abstand nicht vernachlässigbar wären.

Wenn das erste Maß mit dem zweiten Maß bei der abgewandelten Ausführungsform über einen Koppelparameter verbunden ist, durch den der Einfluss des zweiten Maßes auf die Bestimmungen der ganzzahligen Phasenmehrdeutigkeiten und des Abstands eingestellt werden kann, braucht die vorbestimmte Länge nicht von vornherein exakt bekannt zu sein.

Bei der Optimierung der Bewertungsfunktion werden zweckmäßigerweise nacheinander verschiedene ganzzahlige Phasenmehrdeutigkeiten in die Bewertungsfunktion eingesetzt. Die ganzzahligen Phasenmehrdeutigkeiten können dabei anhand eines Suchbaums ausgewählt werden, dessen Zweige Reihen von verschiedenen Phasenmehrdeutigkeiten entsprechen und bei dem Suchbaumzweige mit eine Phasenmehrdeutigkeit oder einer Länge des Abstandsvektors außerhalb von Fehlergrenzen ausgeschlossen werden.

Die Genauigkeit des Verfahrens kann weiter verbessert werden, wenn Linearkombinationen der Phasenmessungen gebildet werden und deren Phasenmehrdeutigkeiten gesucht werden.

Zur weiteren Steigerung der Genauigkeit, wird durch die geometrie-erhaltenden Linearkombinationen das Verhältnis von Wellenlänge zur Standardabweichung des Rauschens der Linearkombination maximiert.

Daneben ist es auch möglich, die Phasenmessungen mit Codemessungen zu kombinieren, um die Wellenlänge der Linearkombination der Phasenmessungen zu vergrößern und damit die Verlässlichkeit der Schätzungen zu erhöhen.

Das Verfahren kann mithilfe einer Vorrichtung ausgeführt werden, die wenigstens zwei Empfänger aufweist, die Code- und Phasenmessungen an Navigationssignalen durchführen, und die ferner mit einer Auswerteeinheit versehen ist, mit der ein Abstandsvektor zwischen den Empfängern bestimmbar ist. Die Auswerteeinheit ist dabei zur Ausführung des Verfahrens eingerichtet.

Eine derartige Vorrichtung kann dazu verwendet werden, einen Istwert für eine Regelung zur Stabilisierung einer schwebenden Last bereitzustellen, die mit einem der beiden Empfänger versehen ist, und die von einer Trägervorrichtung gehalten ist, die mit dem anderen der beiden Empfänger ausgestattet ist. Damit lassen sich insbesondere schwebende Lasten, die von einem Lasthubschrauber oder Lastkran gehalten sind, stabilisieren.

Weitere Vorteile und Eigenschaften der Erfindung gehen aus der nachfolgenden Beschreibung hervor, in der Ausführungsbeispiele der Erfindung anhand der Zeichnung im Einzelnen erläutert werden. Es zeigen:

Figur 1    eine Darstellung einer Vorrichtung zur Stabilisierung einer schwebenden Last;

Figur 2    ein Ablaufdiagramm eines Verfahrens zur Bestimmung der Relativposition zweier Empfänger eines Satellitennavigationssystems;

Figur 3    ein Ablaufdiagramm eines weiteren Verfahrens zur Bestimmung der Relativposition zweier Empfänger eines Satellitennavigationssystems;

Figur 4    die Darstellung eines Suchbaums zur Auswahl ganzzahliger Phasenmehrdeutigkeiten;

Figur 5    ein Diagramm, in dem die Wahrscheinlichkeit für eine falsche Auflösung der Phasenmehrdeutigkeiten für verschiedene Verfahren über mehrere Epochen aufgetragen ist;

Figur 6    ein Diagramm, in dem die Wahrscheinlichkeit für eine falsche Auflösung der Phasenmehrdeutigkeiten über die Länge des Abstandsvektors für verschiedene Verfahren aufgetragen ist; und

Figur 7    ein Diagramm, das die Wahrscheinlichkeit für eine falsche Auflösung der Phasenmehrdeutigkeiten im Fall einer Mehrwegausbreitung zeigt.

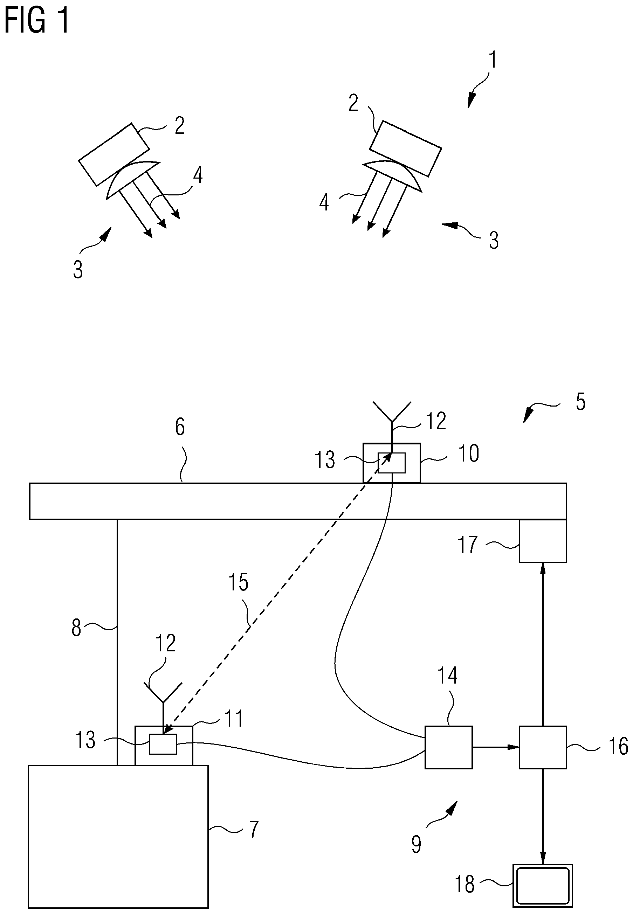

Figur 1 zeigt ein Satellitennavigationssystem 1, das eine Reihe von Satelliten 2 umfasst, die sich in einer Erdumlaufbahn befinden. Die Satelliten 2 senden Navigationssignale 3 aus, die auf Trägersignale 4 aufmoduliert sind. Die Trägersignale 4 weisen insbesondere unterschiedliche Wellenlängen auf. Durch Linearkombinationen der Trägersignale 4 können diverse Fehlerquellen, wie Ionosphärenfehler, Troposphärenfehler sowie Instrumentenfehler oder andere Fehlerquellen eliminiert werden. Bei dem Satellitennavigationssystem 1 kann es sich um eines der herkömmlichen bekannten Satellitennavigationssysteme, wie GPS, Galileo, Glonass, COMPASS oder um ein zukünftiges Satellitennavigationssystem handeln.

Ferner ist in Figur 1 ein Lasttransportsystem 5 dargestellt, das einen Lastenträger 6 aufweist. Bei dem Lastenträger 6 kann es sich um einen Kran, insbesondere um den Ausleger eines Krans oder um einen Lastenhubschrauber handeln. Mit dem Lastenträger 6 lassen sich Lasten 7 transportieren, die über ein Trageseil 8 an dem Lastenträger 6 befestigt sind. Ein Problem bei dem Transport derart schwebender Lasten 7 ist, dass die Last 7 aufgrund von Seitenwinden oder aufgrund der Bewegung des Lastenträgers 6 in Schwingungen geraten kann. Dadurch kann das Absetzen der Last 7 erschwert werden. Das Lasttransportsystem 5 ist daher mit einer Laststabilisierung 9 versehen. Die Laststabilisierung 9 umfasst einen ersten Empfänger 10, der an dem Lastenträger 6 angebracht ist, sowie einen weiteren Empfänger 11, der mit der Last 7 oder dem Trageseil 8 verbunden ist. Die Empfänger 10 und 11 verfügen jeweils über Antennen 12 zum Empfangen der Navigationssignale 3. Die Empfänger 10 und 11 können ferner eine Signalverarbeitungseinheit 13 umfassen. Die Signalverarbeitungseinheit 13 verarbeitet die von den Antennen 12 empfangenen Navigationssignale 3. Das Ergebnis sind sogenannte Code- und Phasenmessungen deren Messwerte auf drahtgebundenem oder drahtlosem Wege an eine Auswerteeinheit 14 übertragen werden. Die Auswerteeinheit 14 berechnet anhand der Phasenmessungen oder anhand der Code- und Phasenmessungen insbesondere einen Abstandsvektor 15, der die Relativposition der beiden Empfänger 10 und 11 wiedergibt. Eine mit dem Abstandsvektor 15 beaufschlagte Steuereinheit 16 kann anhand des Abstandsvektors 15 und weiterer Istwerte ein Steuersignal für einen Antrieb 17 erzeugen. Das Steuersignal dient dazu, den Lastenträger 6 derart zu bewegen, dass die Schwingungen der Last 7 verringert und dadurch die Last 7 stabilisiert wird. Daneben ist es denkbar, die aktuelle Relativposition von Last 7 und Lastenträger 6 auf einem Monitor 18 darzustellen. Die Darstellung auf dem Monitor 18 kann auch dazu verwendet werden, anstelle der Steuerung des Antriebs 17 durch die Steuereinheit 16 den Lastenträger 6 manuell zu steuern oder manuell einzugreifen, falls Gefahr in Verzug ist.

Bei dem in Figur 1 dargestellten Ausführungsbeispiel ist der Empfänger 10 seitlich versetzt gegenüber dem Empfänger 11 angeordnet. In der Praxis wird es jedoch zweckmäßig sein, den Empfänger 11 im Bereich der Stelle am Lastenträger 6 anzubringen, an der das Trageseil 8 am Lastenträger 6 angebracht ist, um die Bestimmung der Länge *l* des Abstandsvektors 15 zu erleichtern. Falls der Lastenträger 6 ein Lasthubschrauber ist, wäre die Länge *l* des Abstandsvektors 15 in etwa gleich der Länge des Trageseils 8. Bei einem Lastkran könnte die Länge des Trageseils 8 und damit die Länge des Abstandsvektors 15 mit Hilfe eines Umdrehungszählers an der Trommel des Trageseils 8 bestimmt werden.

Um den Abstandsvektor 15 mit ausreichender Genauigkeit bestimmen zu können, müssen unter anderem die Phasen der Trägersignale 4 ausgewertet werden. Die Phasen der Trägersignale 4 können jedoch mit Phasenmehrdeutigkeiten behaftet sein. Grundsätzlich ist es möglich, die Phasenmehrdeutigkeiten durch ein Verfahren wie beispielsweise dem so genannte LAMBDA (= Least-Squares Ambiguity Decorrelation Adjustment)-Verfahren zu bestimmen, das in der eingangs zitierten Veröffentlichung von TEUNISSEN beschrieben ist. Die kurze Wellenlänge der Trägersignale 4, die typischerweise bei 19 cm liegt, verhindert allerdings aufgrund von Mehrwegeausbreitung sowie unbekannter Instrumentenfehler in der Größenordnung von mehreren Zentimetern eine zuverlässige Bestimmung der ganzzahligen Phasenmehrdeutigkeiten.

Um die Auflösung der Phasenmehrdeutigkeiten zu verbessern, können Vorkenntnisse über die Länge oder die Richtung des Abstandsvektors 15 ausgenutzt werden.

Für den Vektor $\Psi$ der Code- und Phasenmessungen gilt:

$$\boldsymbol{\Psi} = \boldsymbol{H}\boldsymbol{\xi} + \boldsymbol{A}\boldsymbol{N} + \boldsymbol{b} + \boldsymbol{\eta} \qquad (1)$$

mit den Messungen $\Psi$, der Geometriematrix $H$, dem unbekannten Abstandsvektor $\xi$ (= baseline), der Wellenlängenmatrix $A$, den unbekannten ganzzahligen Phasenmehrdeutigkeiten $N$, den unbekannten Systemfehlern $b$ (= biases) und dem weißen Gaußschen Messrauschen $\eta \sim (0, \Sigma)$, wobei $\Sigma$ die Korrelationsmatrix für die einzelnen Messungen ist. Die Aufgabe, die ganzzahligen Phasenmehrdeutigkeiten $N$ unter der Bedingung zu finden, dass der zugehörige Abstandsvektor $\xi$ die bekannte Länge $l$ aufweist, kann mit einem Verfahren der kleinsten Quadrate gelöst werden:

$$\min_{\boldsymbol{\xi}, \boldsymbol{N}} \left\| \boldsymbol{\Psi} - \boldsymbol{H}\boldsymbol{\xi} - \boldsymbol{A}\boldsymbol{N} \right\|_{\Sigma^{-1}}^2, \quad \boldsymbol{\xi} \in \mathbb{R}^3, \quad \boldsymbol{N} \in \mathbb{Z}^K \quad \text{mit} \quad \left\| \boldsymbol{\xi} \right\| = l \qquad (2)$$

wobei $K$ die Zahl der zu bestimmenden ganzzahligen Phasenmehrdeutigkeiten ist, also gleich Anzahl der Trägersignale 4 mal der Anzahl der Satelliten 2 ist, von denen die Empfänger 10 und 11 Satellitensignale 4 empfangen.

In der eingangs erwähnten Veröffentlichung von GIORGI ET AL. wurde vorgeschlagen, den Abstandsvektor zu linearisieren. Insbesondere wurde vorgeschlagen, den Abstandsvektor in sphärischen Koordinaten auszudrücken:

$$\boldsymbol{\xi}(\gamma) = l \begin{bmatrix} \cos(\alpha)\cos(\beta) \\ \cos(\alpha)\sin(\beta) \\ \sin(\alpha) \end{bmatrix} \quad \text{with} \quad \boldsymbol{\gamma} = \begin{bmatrix} \alpha \\ \beta \end{bmatrix} \qquad (3)$$

Dadurch wird die Aufgabe der Minimierung der kleinsten Quadrate und einer Nebenbedingung in ein herkömmliches Problem der Minimierung der kleinsten Quadrate ohne Nebenbedingungen umgewandelt:

$$\min_{\boldsymbol{\gamma}, \boldsymbol{N}} \left\| \boldsymbol{\Psi} - \boldsymbol{H}\boldsymbol{\xi}(\gamma) - \boldsymbol{A}\boldsymbol{N} \right\|_{\Sigma^{-1}}^2, \quad \boldsymbol{\gamma} \in \mathbb{R}^2, \quad \boldsymbol{N} \in \mathbb{Z}^K \qquad (4)$$

Allerdings ist dieses Problem hochgradig nichtlinear. Daher wurde vorgeschlagen, den Abstandsvektor $\xi$ um eine anfänglich Schätzung $\xi(\gamma_0)$ zu linearisieren:

$$\boldsymbol{\xi}(\boldsymbol{\gamma}) = \boldsymbol{\xi}(\boldsymbol{\gamma}_0) + \boldsymbol{C}(\boldsymbol{\gamma}_0)\boldsymbol{\Delta\gamma} \qquad (5)$$

mit

$$\boldsymbol{\gamma}_0 = [\alpha_0,\ \beta_0]^T \qquad (6)$$

und der Jacobimatrix

$$\boldsymbol{C}(\boldsymbol{\gamma}_0) = l \cdot \begin{bmatrix} -\sin(\alpha_0)\cos(\beta_0) & -\cos(\alpha_0)\sin(\beta_0) \\ -\sin(\alpha_0)\sin(\beta_0) & \cos(\alpha_0)\cos(\beta_0) \\ \cos(\alpha_0) & 0 \end{bmatrix} \qquad (7)$$

Die Linearisierung führt zu einem herkömmlichen Problem der kleinsten Quadrate:

$$\min_{\boldsymbol{\gamma},\boldsymbol{N}} \|\boldsymbol{\Delta\Psi} - \boldsymbol{HC}(\boldsymbol{\gamma}_0)\boldsymbol{\Delta\gamma} - \boldsymbol{AN}\|_{\Sigma^{-1}}^2, \quad \boldsymbol{\Delta\gamma} \in \mathbb{R}^2, \quad \boldsymbol{N} \in \mathbb{Z}^K \qquad (8)$$

mit

$$\boldsymbol{\Delta\Psi} = \boldsymbol{\Psi} - \boldsymbol{H}\boldsymbol{\xi}(\boldsymbol{\gamma}_0) \qquad (9)$$

Somit wurde die Nichtlinearität durch Linearisierung bezüglich eines bestimmten Abstandsvektors $\xi(\gamma_0)$ eliminiert.

Die Linearisierung des Abstandsvektors erfordert eine genaue anfängliche Schätzung der Richtung des Abstandsvektors, so dass die Winkel $\alpha_0$ und $\beta_0$ festgelegt werden können. Die anfängliche Schätzung ist in der Regel ausreichend genau, wenn der Abstandsvektor eine Länge größer 100 Meter aufweist. Im Zusammenhang mit dem Positionieren von Lasten 7 durch Lastenträger 6 sind die Abstände jedoch wesentlich kleiner, da die Längen der Trageseile 8 deutlich unterhalb von 100 Meter liegen. Insofern ist die Linearisierung des Abstandsvektors 15 im vorliegenden Fall nicht möglich.

Hinzu kommt, dass die Länge des Abstandsvektors 15 variieren kann. Beispielsweise kann das Trageseil 8 sich in Abhängigkeit vom Gewicht der Last 7 strecken.

Im Folgenden werden zwei Verfahren zur Auflösung der Phasenmehrdeutigkeiten beschrieben, die ohne Linearisierung des Abstandsvektors 15 auskommen.

## A. Auflösung der Phasenmehrdeutigkeit mit starker Nebenbedingung

Die herkömmliche reellwertige Schätzung $\hat{N}$ und eine Schätzung von $\check{\xi}(N)$ können dazu verwendet werden, das Problem der Minimierung der kleinsten Quadrate wie folgt zu formulieren:

$$\min_{\boldsymbol{N}} \left( \left\|\hat{\boldsymbol{N}} - \boldsymbol{N}\right\|_{\Sigma_{\hat{N}}^{-1}}^2 + \min_{\xi_\lambda, \|\xi_\lambda\|=l} \left\|\check{\boldsymbol{\xi}}(\boldsymbol{N}) - \boldsymbol{\xi}_\lambda(\boldsymbol{N})\right\|_{\Sigma_{\check{\xi}(N)}^{-1}}^2 \right) \qquad (10)$$

Es wird somit nach denjenigen ganzzahligen Phasenmehrdeutigkeiten $N$ und dem demjenigen Abstandsvektor $\xi_\lambda$ gesucht, der die in Formel (10) in Klammern angegebene Bewertungsfunktion minimiert.

Die reellwertigen Mehrdeutigkeiten werden durch eine orthogonale Projektion der Messungen $\Psi$ auf den Raum von $H$ erhalten:

$$P_H^\perp \Psi = \underbrace{P_H^\perp A}_{\bar{A}} N + P_H^\perp B + P_H^\perp \eta \qquad \text{mit} \qquad P_H^\perp H = 0 \qquad (11)$$

Eine Schätzung nach der Methode der kleinsten Quadrate ergibt dann die reellwertigen Schätzungen für die Phasenmehrdeutigkeiten:

$$\hat{N} = (\bar{A}^T \Sigma^{-1} \bar{A})^{-1} \bar{A}^T \Sigma^{-1} \Psi \qquad (12)$$

In gleicher Weise wird der Abstandsvektor $\hat{\xi}(N)$ durch eine Schätzung nach der Methode der kleinsten Quadrate erhalten:

$$\check{\xi}(N) = (H^T \Sigma^{-1} H)^{-1} H^T \Sigma^{-1} H (\Psi - AN) \qquad (13)$$

Der zweite Term der gemäß Ausdruck (10) zu minimierenden Bewertungsfunktion kann auch als Lagrangefunktion mit dem Lagrangeparameter $\lambda$ dargestellt werden.

$$f(\lambda) = \left\| \check{\xi}(N) - \xi_\lambda(N) \right\|^2_{\Sigma^{-1}_{\check{\xi}(N)}} + \lambda \left( \left\| \xi_\lambda(N) \right\|^2 - l^2 \right) \qquad (14)$$

Die Minimierung von $f(\lambda)$ bezüglich $\xi_\lambda(N)$ ergibt eine Schätzung für im Abstandsvektor 15 als Funktion des Lagrangeparameters A und der ganzzahligen Phasenmehrdeutigkeiten $N$:

$$\check{\xi}_\lambda(N) = \left( \Sigma^{-1}_{\check{\xi}(N)} - \lambda \mathbf{1} \right)^{-1} \Sigma^{-1}_{\check{\xi}(N)} \check{\xi}(N) \qquad (15)$$

Diese Schätzung des Abstandsvektors der Länge *l* kann in die Zwangsbedingungen für den Abstand eingesetzt werden:

$$\left\| \left( \Sigma^{-1}_{\check{\xi}(N)} - \lambda \mathbf{1} \right)^{-1} \Sigma^{-1}_{\check{\xi}(N)} \check{\xi}(N) \right\|^2 - l^2 = 0 \qquad (16)$$

Die Unbekannten in Gleichung (16) sind der Lagrangeparameter $\lambda$ und die ganzzahligen Phasenmehrdeutigkeiten $N$. Diese Gleichung muss für den Lagrangeparameter $\lambda$ gelöst werden, was nicht in einer analytischen Form ausgeführt werden kann. Mithilfe eines mehrdimensionalen Gauß-Newton-Verfahrens kann jedoch Gleichung (16) effizient gelöst werden.

Für jeden Kandidaten des ganzzahligen Vektors der Phasenmehr deutigkeiten $N$ wird der Lagrangeparameter $\lambda$ iterativ bestimmt:

$$\lambda_{n+1} = \lambda_n + J^{-1}(\lambda_n, N) \cdot f(\lambda_n) \qquad (17)$$

mit der Jacobimatrix:

$$J(\lambda_n, N) = \frac{\partial f(\lambda_n, N)}{\partial \lambda_n} \qquad (18)$$

und der Lagrangefunktion:

$$f(\lambda_n, \boldsymbol{N}, l) = \left\| \left( \Sigma^{-1}_{\breve{\xi}(N)} - \lambda_n \mathbf{1} \right)^{-1} \Sigma^{-1}_{\breve{\xi}(N)} \breve{\xi}(N) \right\|^2 - l^2 \qquad (19)$$

Der Startwert für $\lambda$ wird dabei gleich 0 gewählt. Die iterative Berechnung von $\lambda$ wird so lange durchgeführt, bis der Wert von $\lambda$ konvergiert ist.

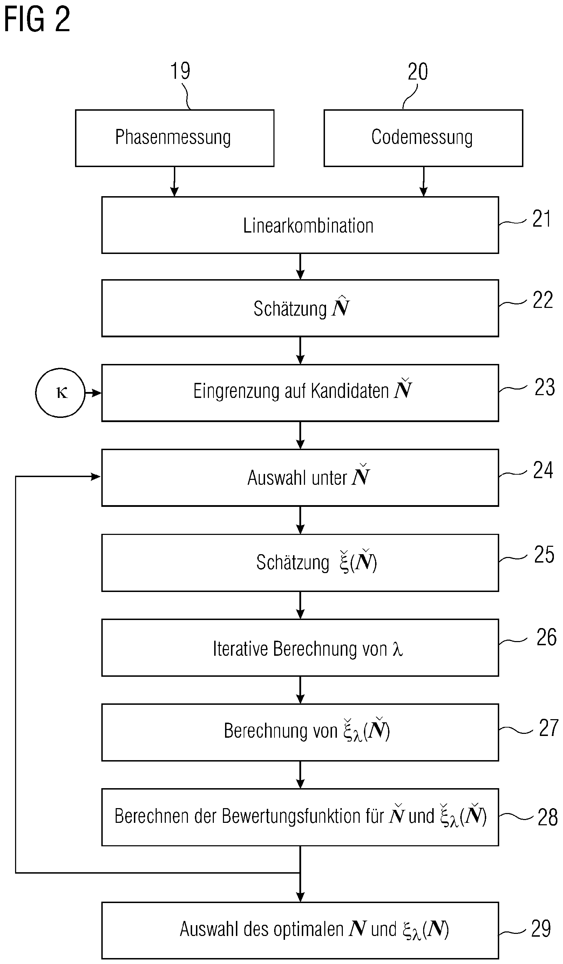

In Figur 2 ist der Ablauf des Verfahrens dargestellt: In einem ersten Schritt werden die Phasenmessungen 19 an den Trägersignalen 2 durchgeführt. Parallel dazu können auch Codemessungen 20 durchgeführt werden. Aus den bei den Phasen messungen 19 und den Codemessungen 20 erhaltenen Phasenmesswerten und Codemesswerten können durch Linearkombination 21 Kombinationssignale gebildet werden. Die Kombinationssignale können auch nur mit den Phasenmessungen gebildet werden. Für diese Kombinationssignale wird eine Schätzung 22 gemäß Gleichung (12) für die Phasenmehrdeutigkeiten $N$ durchgeführt, die reellwertige Phasenmehrdeutigkeiten $\hat{N}$ ergibt. Als nächstes wird in Abhängigkeit von einem Integritätsfaktor $\kappa$ eine Eingrenzung 23 der in Frage kommenden ganzzahligen Phasenmehrdeutigkeiten getroffen und dabei anhand der reellwertigen Phasenmehrdeutigkeiten $\hat{N}$ eine Anzahl von Kandidaten $\breve{N}$ für die ganzzahligen Phasenmehrdeutigkeiten $N$ bestimmt. Ein Verfahren, das bei der Eingrenzung 23 angewandt werden kann, wird im Folgenden noch näher beschrieben. Unter den in Frage kommenden ganzzahligen Phasenmehrdeutigkeiten wird nun eine bestimmte ganzzahlige Phasenmehrdeutigkeit durch eine Auswahl 24 ausgewählt. Mit einer weiteren Schätzung 25 gemäß Gleichung (13) wird der Abstandsvektor $\breve{\xi}(N)$ für die ausgewählten ganzzahligen Phasenmehrdeutigkeiten geschätzt. Anschließend wird eine iterative Berechnung 26 von $\lambda$ gemäß Formeln (17) bis (19) durchgeführt. Nachdem $\lambda$ konvergiert ist, erfolgt eine Berechnung 27 von $\breve{\xi}_\lambda(N)$ gemäß Formel (15). Daran schließt eine Auswertung 28 der Bewertungsfunktion nach Formel (10) an. Falls die Bewertungsfunktion noch nicht für alle Kandidaten $\breve{N}$ ausgewertet worden ist, wird erneut durch die Auswahl 25 ein Kandidat für die ganzzahligen Phasenmehrdeutigkeiten ausgewählt und die nachfolgenden Verfahrensschritte bis zur Berechnung 28 der Bewertungsfunktion wiederholt. Wenn für alle Kandidaten $N$ für die ganzzahligen Phasenmehrdeutigkeiten die Berechnung 28 der Bewertungsfunktion durchgeführt worden ist, kann durch eine abschließenden Auswahl 29 derjenige Vektor $N$ der ganzzahligen Phasenmehrdeutigkeiten herausgesucht werden, für den die Bewertungsfunktion gemäß Formel (10) den kleinsten Wert ergibt. Der zugehörige Abstandsvektor $\breve{\xi}_\lambda(N)$ kann dann als Ist-Wert der Steuereinheit 15 zur Verfügung gestellt werden.

**B. Auflösung der Phasenmehrdeutigkeit mit schwachen Nebenbedingungen**

Bei diesem Verfahren muss der Abstandsvektor 15 nicht notwendigerweise die Länge $l$ aufweisen. Dies wird erreicht, indem in der Bewertungsfunktion die entsprechende Zwangsbedingung nur schwach mit dem Koppelparameter $\mu$ angekoppelt wird.

Im vorliegenden Fall lässt sich die Bewertungsfunktion schreiben als:

$$J(\xi, \boldsymbol{N}) = \left\| \Psi - \boldsymbol{H}\xi - \boldsymbol{AN} \right\|^2_{\Sigma^{-1}} + \mu \cdot \left( \left\| \xi \right\| - l \right)^2 \qquad (20)$$

In dieser Bewertungsfunktion zeichnet der erste Ausdruck die gewichtete Summe der quadratischen Fehler (SSE) und der zweite Ausdruck bezeichnet die Differenz zwischen der Länge des Abstandsvektors und einer a priori bekannten Länge $l$ des Abstandsvektors 15. Der Parameter $\mu$ hängt von der Zuverlässigkeit des Vorwissens ab. Ein großer Wert für $\mu$ drückt aus, dass der Längenwert $l$ als zuverlässig eingeschätzt wird, wohingegen ein niedriger Wert für $\mu$ ausdrückt, dass der Längenwert $l$ als fehlerbehaftet angesehen wird. Zwischen dem Koppelparameter $\mu$ und dem Lagrangeparameter $\lambda$ des vorhergehenden Verfahrens besteht ein wesentlicher Unterschied. Im vorhergehenden Verfahren wurde der Lagrangeparameter $\lambda$ iterativ berechnet, um die Bewertungsfunktion zu minimieren. Der Koppelparameter $\mu$ wird dagegen a priori festgelegt um die Stärke der Nebenbedingungen auszudrücken. Im vorhergehenden Verfahren weist der aufgefundene Abstandsvektor exakt die Länge $l$ auf, wohingegen in diesem Verfahren der aufgefundene Abstandsvektor eine von dem Längenwert $l$ abweichende Länge aufweisen kann.

Die Ableitung der Bewertungsfunktion bezüglich des Abstandsvektors ergibt:

$$\frac{\partial J}{\partial \boldsymbol{\xi}} = -2\boldsymbol{H}^T \boldsymbol{\Sigma}^{-1}(\boldsymbol{\Psi} - \boldsymbol{A}\boldsymbol{N}) + 2\boldsymbol{H}^T \boldsymbol{\Sigma}^{-1}\boldsymbol{H}\boldsymbol{\xi} + \mu \frac{\boldsymbol{\xi}}{\|\boldsymbol{\xi}\|} 2(\|\boldsymbol{\xi}\| - l) \stackrel{!}{=} 0 \qquad (21)$$

Diese Gleichung kann nicht für den Abstandsvektor $\xi$ in geschlossener Form gelöst werden. Die Lösung kann jedoch auf iterativem Wege mit der Newtonmethode der steilsten Gradienten gefunden werden:

$$\boldsymbol{\xi}_{n+1} = \boldsymbol{\xi}_n + \frac{\partial J^2}{\partial^2 \boldsymbol{\xi}}\bigg|_{\boldsymbol{\xi}=\boldsymbol{\xi}_n} \cdot \frac{\partial J}{\partial \boldsymbol{\xi}}\bigg|_{\boldsymbol{\xi}=\boldsymbol{\xi}_n} \qquad (22)$$

mit der zweiten Ableitung der Bewertungsfunktion:

$$\frac{\partial J^2}{\partial^2 \boldsymbol{\xi}} = 2\boldsymbol{H}^T \boldsymbol{\Sigma}^{-1}\boldsymbol{H} + 2\mu \cdot \left(\mathbf{1} - l \cdot \left(\mathbf{1}\frac{1}{\|\boldsymbol{\xi}\|} - \frac{\boldsymbol{\xi}\boldsymbol{\xi}^T}{\|\boldsymbol{\xi}\|^3}\right)\right) \qquad (23)$$

Als Startwert kann hier die Schätzung für $\xi$ gemäß Gleichung (13) verwendet werden.

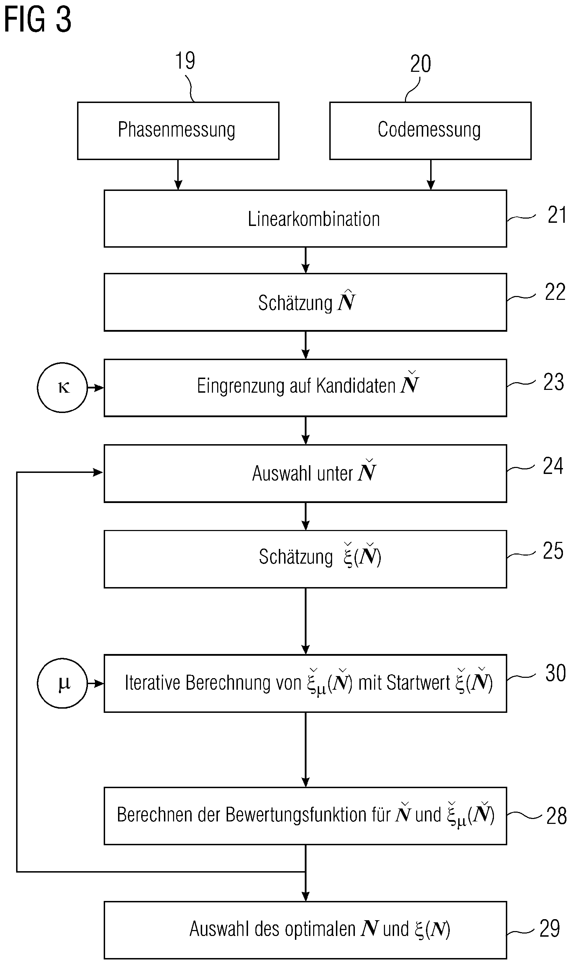

Der Ablauf des Verfahrens ist in Figur 3 dargestellt: Das Verfahren beginnt mit den gleichen Verfahrensschritten wie das in Figur 2 dargestellte Verfahren. Nach der Auswahl 25 wird eine iterative Lösung 30 der Gleichung (21) durchgeführt, wobei der in der Schätzung 23 geschätzte Abstandsvektor $\breve{\xi}(\boldsymbol{N})$ als Startwert verwendet wird. Die übrigen Verfahrensschritte entsprechen wieder den Verfahrensschritten des in Figur 2 dargestellten Verfahrens mit der Ausnahme, dass hier ein von dem Koppelparameter $\mu$ abhängiges $\xi_\mu$ anstelle ein von $\lambda$ abhängiges $\xi_\lambda$ berechnet wird.

## C. Eingrenzung der ganzzahligen Phasenmehrdeutigkeiten

In den Verfahren, die in den Figuren 2 und 3 dargestellt worden sind, wird vor der Auswahl 24 der ganzzahligen Phasen mehrdeutigkeiten die Eingrenzung 23 durchgeführt, die nachfolgend im Detail beschrieben wird.

Die Suche nach Kandidaten für die ganzzahligen Phasenmehrdeu tigkeiten zielt darauf ab, einen ganzzahligen Kandidatenvektor $\breve{\boldsymbol{N}}$ zu finden, der die Bedingung erfüllt:

$$\breve{\boldsymbol{N}} = \min_{\boldsymbol{N}} \|\boldsymbol{N} - \hat{\boldsymbol{N}}\|^2_{\boldsymbol{\Sigma}_{\hat{N}}^{-1}} \qquad (24)$$

In der Praxis ist der Suchraum durch einen bestimmten Wert beschränkt:

$$\|\boldsymbol{N} - \hat{\boldsymbol{N}}\|^2_{\boldsymbol{\Sigma}_{\hat{N}}^{-1}} \leq \chi^2 \qquad (25)$$

wobei $\chi^2$ gleich der Fehlernorm der sequentiellen Lösung ohne Nebenbedingung gewählt werden kann. Insofern ist es möglich, die Suche nach den Kandidaten für die ganzzahligen Phasenmehrdeutigkeiten einzugrenzen.

Wie in den eingangs erwähnten Veröffentlichungen von TEUNISSEN beschrieben, kann die Fehlernorm auch durch die Schätzungen für die ganzzahligen Fehler ausgedrückt werden als:

$$\|\boldsymbol{N} - \hat{\boldsymbol{N}}\|^2_{\boldsymbol{\Sigma}_{\hat{N}}^{-1}} = \frac{\left(N_i - \hat{N}_{i|1,\ldots,i-1}\right)^2}{\sigma^2_{\hat{N}_{i|1,\ldots,i-1}}} \qquad (28)$$

mit

$$\hat{N}_{k|1,\ldots,k-1} = \hat{N}_k - \sum_{j=1}^{k-1} \sigma_{\hat{N}_k \hat{N}_{j|1,\ldots,j-1}} \sigma^{-2}_{\hat{N}_{j|1,\ldots,j-1}} \left(\hat{N}_{j|1,\ldots,j-1} - [\hat{N}_{j|1,\ldots,j-1}]\right)$$

$$(29)$$

und

$$\sigma^2_{\hat{N}_{k|1,\ldots,k-1}} = \sigma^2_{\hat{N}_k} - \sum_{j=1}^{k-1} \sigma^2_{\hat{N}_k \hat{N}_{j|1,\ldots,j-1}} \sigma^{-2}_{\hat{N}_{j|1,\ldots,j-1}}$$

$$(30)$$

Wobei [] in Gleichung (29) eine Rundung auf den nächst gelegenen ganzzahligen Wert bedeutet.

Die quadratische Summe der bedingten Fehler wird nun umgeformt, wobei nur ein Ausdruck auf der linken Seite beibehalten wird und die restlichen Ausdrücke auf die rechte Seite gebracht werden. Dies ergibt:

$$\frac{\left(N_i - \hat{N}_{i|1,\ldots,i-1}\right)^2}{\sigma^2_{\hat{N}_{i|1,\ldots,i-1}}} \leq \chi^2 - \sum_{l=1}^{i-1} \frac{\left(N_l - \hat{N}_{l|1,\ldots,l-1}\right)^2}{\sigma^2_{\hat{N}_{l|1,\ldots,l-1}}} - \sum_{l=i+1}^{K} \frac{\left(N_l - \hat{N}_{l|1,\ldots,l-1}\right)^2}{\sigma^2_{\hat{N}_{l|1,\ldots,l-1}}}$$

$$\leq \chi^2 - \sum_{l=1}^{i-1} \frac{\left(N_l - \hat{N}_{l|1,\ldots,l-1}\right)^2}{\sigma^2_{\hat{N}_{l|1,\ldots,l-1}}}$$

$$(31)$$

was eine sequenzielle Suche nach den ganzzahligen Phasenmehrdeutigkeiten ermöglicht. Die Menge der Kandidaten für jede ganzzahlige Phasenmehrdeutigkeit $N_i$ ist somit gegeben durch:

$$\left|N_i - \hat{N}_{i|1,\ldots,i-1}\right| \leq \sigma_{\hat{N}_{i|1,\ldots,i-1}} \sqrt{\chi^2 - \sum_{l=1}^{i-1} \frac{\left(N_l - \hat{N}_{l|1,\ldots,l-1}\right)^2}{\sigma^2_{\hat{N}_{l|1,\ldots,l-1}}}}$$

$$(32)$$

was eine untere und eine obere Grenze für $N_i$ liefert. Damit lässt sich ein sequenzieller Suchbaum für alle Komponenten des Vektors der ganzzahligen Phasenmehrdeutigkeiten mit einer Fehlernorm kleiner als $\chi^2$ aufbauen. Die Effizienz der Suche kann weiter verbessert werden, indem die Länge des Abstandsvektors in jedem Zweig des Suchbaums überprüft wird. Ein Zweig des Suchbaums wird nur dann weiterverfolgt, wenn die Differenz zwischen der geschätzten Länge des Abstandsvektors 15 und dessen vorbekannter Wert kleiner ist als die Standardabweichung der Längenschätzung des Abstandsvektors multipliziert mit einem Integritätsfaktor $\kappa$:

$$\left|\|\hat{\boldsymbol{\xi}}(\boldsymbol{N}_{M_i})\| - l\right| \leq \kappa \cdot \sigma_{\|\hat{\boldsymbol{\xi}}\|}$$

$$(33)$$

mit der Schätzung für die Länge des Abstandsvektors 15 ohne Nebenbedingungen:

$$\hat{\boldsymbol{\xi}}(\boldsymbol{N}_{M_i}) = \arg\min_{\boldsymbol{\xi}} \|\boldsymbol{\Psi} - \boldsymbol{H}\boldsymbol{\xi} - \boldsymbol{A}\boldsymbol{N}_{M_i}\|^2_{\boldsymbol{\Sigma}^{-1}}$$

$$(34)$$

und dem teilweisen fertigbestimmten Vektor der Phasenmehrdeutigkeiten

$$N_{M_i} = \begin{bmatrix} \check{N}_1 & \ldots & \check{N}_{M_i} & | & N_{M_{i+1}} & \ldots & N_K \end{bmatrix} \tag{35}$$

in dem die ersten $M_i$ Phasenmehrdeutigkeiten bereits auf ganzzahlige Werte festgelegt worden sind und die verbleibenden Komponenten noch unbekannt sind. Es ist offensichtlich, dass die zunehmende Anzahl von festgelegten Phasenmehrdeutigkeiten eine geringere Standardabweichung der Abstandschätzung bewirkt. Infolgedessen wird mit zunehmenden $M_i$ die Abstandsbeschränkung immer stärker, was zu einer wesentlichen Verbesserung der Sucheffizienz führt.

Die Standardabweichung der Längenschätzung in Formel (33) lässt sich ferner berechnen durch:

$$\sigma_{\|\xi\|} = \sqrt{\sigma_{\hat{\xi}_x}^2 + \sigma_{\hat{\xi}_y}^2 + \sigma_{\hat{\xi}_z}^2} \tag{36}$$

In Figur 3 ist ein Beispiel für einen Suchbaum 31 dargestellt. Dieser Suchbaum weist einen Ausgangsknoten 32 auf, dem eine Auswahlmöglichkeit für die erste Komponente des Vektors $\check{N}$ der Kandidaten für die ganzzahligen Phasenmehrdeutigkeiten zugeordnet ist. Dem Ausgangsknoten 32 folgen nach unten verschiedene Knotenebenen 33, von deren Knoten 34 aus weitere Komponenten des Vektors der Phasenmehrdeutigkeiten ausgewählt werden können.

Auf der untersten Knotenebene 33 befinden sich die Endknoten 35, in denen die letzte Komponente des Vektors $\check{N}$ der Phasenmehrdeutigkeiten festgelegt wird. Der Suchbaum 31 verfügt somit über verschiedene Suchbaumzweige 36, die sich jeweils vom Ausgangsknoten 32 zu den Endknoten 35 erstrecken und die den verschiedenen Möglichkeiten entsprechen, den Vektor $\check{N}$ der Phasenmehrdeutigkeiten zu besetzen.

Der Suchbaum wird nun wie folgt abgearbeitet:
In einem ersten Schritt werden die untere und die obere Grenze $l_{\hat{N}_1}$ und $u_{\hat{N}_1}$ bestimmt, für die allgemein gilt:

$$l_{\hat{N}_{i|1,\ldots,i-1}} = \hat{N}_{i|1,\ldots,i-1} - \sigma_{N_{i|1,\ldots,i-1}} \sqrt{\chi^2 - \sum_{l=1}^{i-1} \frac{(N_l - \hat{N}_{l|1,\ldots,l-1})^2}{\sigma_{N_{l|1,\ldots,l-1}}^2}} \tag{37}$$

$$u_{\hat{N}_{i|1,\ldots,i-1}} = \hat{N}_{i|1,\ldots,i-1} + \sigma_{N_{i|1,\ldots,i-1}} \sqrt{\chi^2 - \sum_{l=1}^{i-1} \frac{(N_l - \hat{N}_{l|1,\ldots,l-1})^2}{\sigma_{N_{l|1,\ldots,l-1}}^2}} \tag{38}$$

Die erste Komponente $\check{N}_1$ wird innerhalb der Grenzen $l_{\hat{N}_1}$ und $u_{\hat{N}_1}$ bestimmt:

$$l_{\hat{N}_1} \leq \check{N}_1 \leq u_{\hat{N}_1} \tag{39}$$

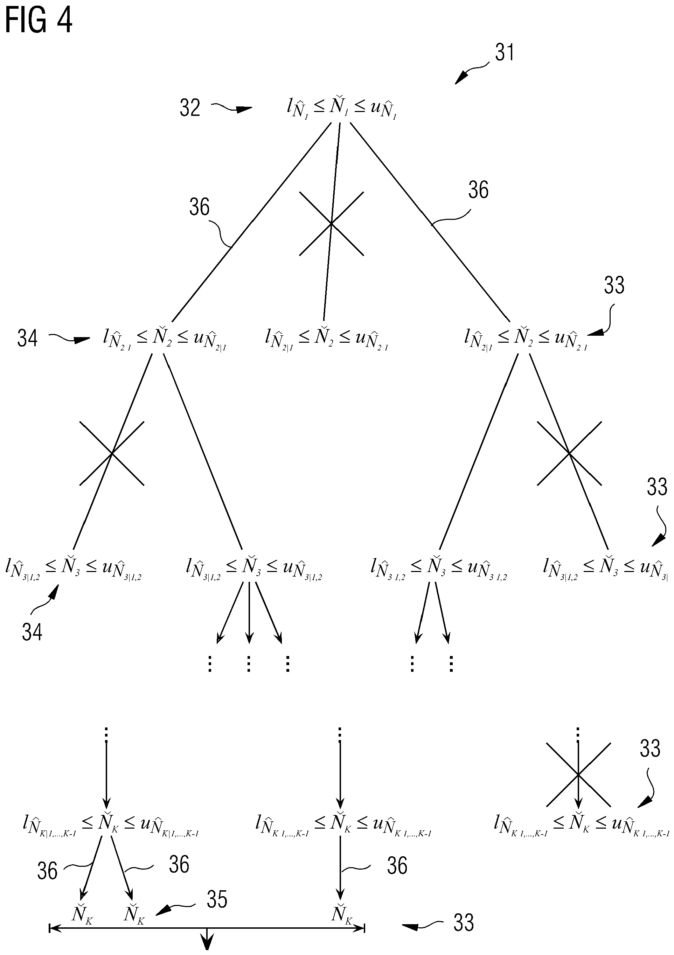

Bei dem in Figur 4 dargestellten Beispiel gibt es drei Möglichkeiten für die Besetzung von $N_1$, da drei Suchbaumzweige 36 vom Ausgangsknoten 32 ausgehen. Anschließend werden die drei Suchbaumzweige 36 auf die in Formel (33) angegebene Bedingung überprüft. Im vorliegenden Fall wird insbesondere überprüft, ob

$$\left| \left\| \hat{\xi}(N_{M_1}) \right\| - l \right| \leq \kappa \sigma_{\|\hat{\xi}(N_{M_1})\|} \tag{40}$$

gilt. Der Suchbaumzweig 36 wird nur weiterverfolgt wenn die Bedingung (40) erfüllt ist. Im vorliegenden Fall werden nur die beiden äußeren Suchbaumzweige 36 weiterverfolgt.

In der nächsten Knotenebene 36 wird die ganzzahligen Werde für die Komponente $\breve{N}_2$ ausgewählt, wobei für die Komponente $\breve{N}_2$ gelten soll:

$$l_{\hat{N}_{2|1}} \leq \breve{N}_2 \leq u_{\hat{N}_{2|1}} \qquad (39)$$

Die ausgewählten vier Werte von $\breve{N}_2$ werden wieder daraufhin überprüft, ob die Bedingung (33) erfüllt ist:

$$\left| \left\| \hat{\xi}(\boldsymbol{N}_{M_2}) \right\| - l \right| \leq \kappa \sigma_{\left\| \hat{\xi}(\boldsymbol{N}_{M_2}) \right\|} \qquad (41)$$

Bei dem in Figur 4 dargestellten Beispiel werden daraufhin nur die beiden inneren Suchbaumzweige 36 beibehalten.

In der folgenden Knotenebene 33 werden daraufhin die Werte für die Komponente $\breve{N}_3$ ausgewählt und anschließend die ausgewählten Werte erneut hinsichtlich der Bedingung (33) erfüllt ist.

In der Knotenebene 33 oberhalb der Endknoten 35 befindet werden schließlich die Werte für $\breve{N}_K$ ausgewählt, wobei gelten soll:

$$l_{\hat{N}_{K|1,\ldots,K-1}} \leq \breve{N}_K \leq u_{\hat{N}_{K|1,\ldots,K-1}} \qquad (42)$$

Die ausgewählten Werte $\breve{N}_K$ werden daraufhin wieder überprüft, ob die ausgewählten Werte $\breve{N}_K$ die Bedingung (33) erfüllen:

$$\left| \left\| \hat{\xi}(\boldsymbol{N}_{M_K}) \right\| - l \right| \leq \kappa \sigma_{\left\| \hat{\xi}(\boldsymbol{N}_{M_K}) \right\|} \qquad (43)$$

Bei dem in Figur 4 dargestellten Ausführungsbeispiel erreichen nur drei Suchbaumzweige 36 die Endknoten 35. Insofern brauchen nur drei Kandidaten für die ganzzahligen Phasenmehrdeutigkeiten bewertet werden.

**D. Weitere Verbesserungen mit Mehrfrequenzkombinationen von Code- und Phasenmessungen**

Die Verlässlichkeit der Auflösung der Phasenmehrdeutigkeiten kann durch Mehrfrequenzlinearkombinationen mit großer Wellen länge weiterverbessert werden. Die Kombinationen können sowohl Codemessungen $\rho_{u,m}^k$ und Phasenmessungen $\lambda_m \phi_{u,m}^k$ einschließen:

$$\sum_{m=1}^{M} \alpha_m \lambda_m \phi_{u,m}^k + \beta_m \rho_{u,m}^k \qquad (44)$$

mit der kombinierten Wellenlänge A, den Phasenkoeffizienten $\alpha_{u,m}^k$ und den Codekoeffizienten $\beta_{u,m}^k$. Die Auswahl dieser Koeffizienten wird so vorgenommen, dass die Phasenmehrdeutigkeiten maximal unterschieden werden können:

$$\max_{\alpha_m,\beta_m} D = \max_{\alpha_m,\beta_m} \frac{\lambda}{2\sigma} \qquad (45)$$

wobei weitere Bedingungen erfüllt sein müssen. Zunächst muss die Linearkombination die Geometrie erhalten:

$$\sum_{m=1}^{M} \alpha_m + \beta_m = 1 \qquad (46)$$

und zweitens muss die Linearkombination der Phasenmehrdeutig keiten von verschiedenen Wellenlängen ein ganzzahliges Vielfaches der gemeinsamen Wellenlänge sein:

$$\sum_{m=1}^{M} \alpha_m \lambda_m N_m = \lambda N \qquad (47)$$

was äquivalent ist zu:

$$N = \sum_{m=1}^{M} \underbrace{\frac{\alpha_m \lambda_m}{\lambda}}_{j_m} N_m \qquad (48)$$

Da $N_m$ unbekannt aber ganzzahlig ist, muss $j_m$ ganzzahlig sein um ein ganzzahliges $N$ zu erhalten. Ein Umformen dieser Gleichung ergibt die Phasenkoeffizienten:

$$\alpha_m = \frac{j_m \lambda}{\lambda_m} \qquad (49)$$

die um den ganzzahligen Koeffizienten $j_m$ und der kombinierten Wellenlänge

$$\lambda = \frac{w_\phi}{\sum\limits_{m=1}^{M} \frac{j_m}{\lambda_m}} \in \mathbb{R} \qquad (50)$$

abhängt, wobei $\omega_\Phi$ der gesamte Phasenkoeffizient ist:

$$w_\phi = \sum_{m=1}^{M} \alpha_m. \qquad (51)$$

Die Mehrwegeausbreitung und die Instrumentenfehler können häufig anhand von Abweichungen des Abstandsvektors 15 und der gewichteten Summe der quadratischen Fehler erkannt werden. Manche Instrumentenfehler können jedoch nicht anhand von Abstandsabweichungen erkannt werden. Bei einer Schätzung der ganzzahligen Phasenmehrdeutigkeiten mithilfe einer Minimierung der kleinsten Quadrate ohne Nebenbedingung können die folgenden Arten von Instrumentenfehlern nicht detektiert werden:

$$\boldsymbol{b}_1 = \boldsymbol{H}\Delta\boldsymbol{\xi} \quad \text{und} \quad \boldsymbol{b}_2 = \boldsymbol{A}\Delta\boldsymbol{N} \qquad (52)$$

wobei der erste Vektor der Instrumentenfehler einer Positionsabweichung und der zweite Vektor der Instrumentenfehler einer Abweichung der ganzzahligen Phasenmehrdeutigkeit entspricht. Beide Fälle sind verhältnismäßig unwahrscheinlich. Die Auflösung der Phasenmehrdeutigkeit und der Nebenbedingungen reduziert die Menge der nichterfassbaren Instrumentenfehler da gilt:

$$\|\boldsymbol{\xi} + \Delta\boldsymbol{\xi}\| = l \tag{53}$$

### E. Vorteile

Die Auflösung der Phasenmehrdeutigkeiten und der Nebenbedingungen hat zwei wesentliche Vorteile gegenüber einer Phasenauflösung ohne Nebenbedingungen. Zum einen wird die Zuverlässigkeit der Auflösung der Phasenmehrdeutigkeiten verbessert und zum anderen wird die Genauigkeit der Schätzung des Abstandsvektors verbessert.

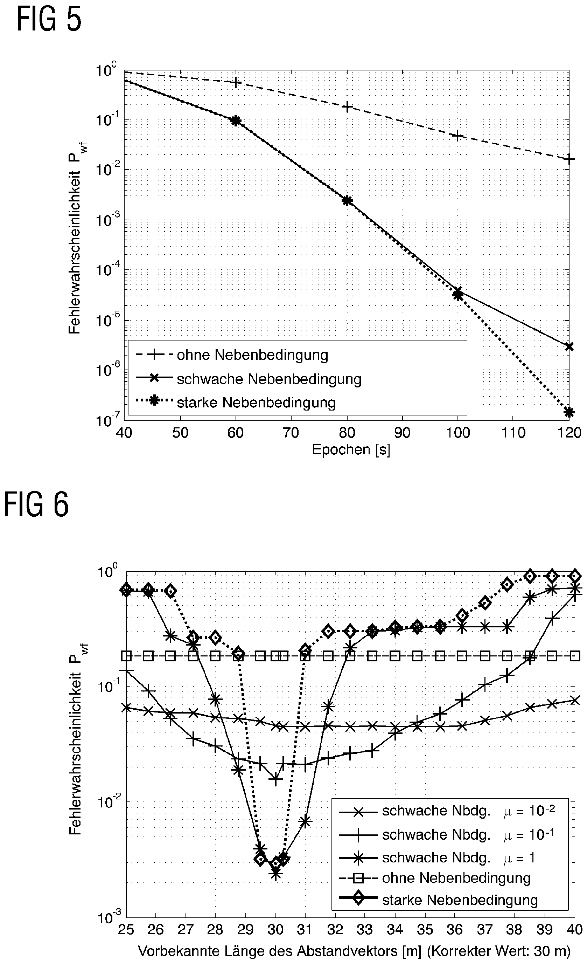

Figur 5 veranschaulicht den Vorteil einer Auflösung der Phasenmehrdeutigkeiten unter Nebenbedingungen am Beispiel von Phasenmehrdeutigkeiten einer E1-E5 Linearkombination von Doppeldifferenzmessungen, wobei nur Phasenmessungen mit einer Kombinationswellenlänge von A = 78 cm verarbeitet wurden. Die genaue Kenntnis der Länge des Abstandsvektors verringert die Fehlerwahrscheinlichkeit für eine falsche Bestimmung der Phasenmehrdeutigkeiten um mehrere Größenordnungen.

Die in Figur 5 aufgetragenen Fehlerwahrscheinlichkeit $P_{wf}$ ist definiert durch:

$$P_{wf} = P(\breve{\boldsymbol{N}} \neq \boldsymbol{N}) = \lim_{k \to \infty} \sum_{k=1}^{K} f(\breve{\boldsymbol{N}}_K) \quad \text{mit} \quad f(\breve{\boldsymbol{N}}_k) = \begin{cases} 1, \text{ falls } \boldsymbol{N}_k \neq \boldsymbol{N} \\ 0, \text{ sonst} \end{cases} \tag{54}$$

und wird durch umfangreiche Monte-Carlo-Simulationen auf der Grundlage der Statistik der Schätzung für die reellwertige Phasenmehrdeutigkeiten bestimmt:

$$\hat{\boldsymbol{N}} = \mathcal{N}(\boldsymbol{N}, \Sigma_{\hat{N}}) \tag{55}$$

In den Monte-Carlo-Simulationen wird zunächst der Vektor der wahren Mehrdeutigkeit *N* auf einen beliebigen Wert gesetzt. Anschließend werden verschiedene, reellwertige Phasenmehrdeutigkeiten entsprechend ihrer Wahrscheinlichkeitsverteilung erzeugt und jeweils die in den Figuren 2 und 3 beschriebenen Verfahren angewandt. Nach jedem Verfahrensdurchlauf wird festgestellt, ob die Phasenmehrdeutigkeiten richtig aufgelöst worden sind. Durch Mittelung über die Ergebnisse der Monte-Carlo-Simulation wird dann die Fehlerwahrscheinlichkeit berechnet.

Anhand von Figur 6 wird deutlich, dass die Auflösung der Phasenmehrdeutigkeiten mit schwachen Nebenbedingungen wesentlich besser ist als die anderen Verfahren, während die Länge des Abstandsvektors 15 nicht von vornherein bekannt ist. Durch die Auflösung der Phasenmehrdeutigkeiten mit schwachen Nebenbedingungen wird der Suchraum eingeschränkt, was zu einer niedrigeren Fehlerrate als bei einer Auflösung ohne Nebenbedingung führt. Die Auflösung mit schwacher Nebenbedingung ist auch besser als die Auflösung mit starker Nebenbedingung, da die Auflösung mit starker Nebenbedingung den Suchraum zu stark einschränkt. Die ganzzahligen Kandidaten für beide Auflösungen mit Nebenbedingungen wurden unter den zehn besten Kandidaten ausgewählt, die mithilfe des LAMBDA-Verfahrens bestimmt worden sind. Anhand von Figur 6 wird deutlich, dass der Koppelfaktor $\mu$ entsprechend der erwarteten Genauigkeit des vorbestimmten Werts gewählt werden sollte.

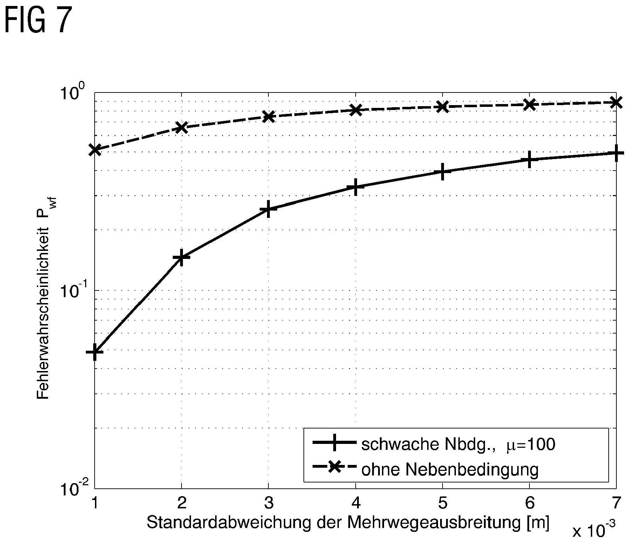

Figur 7 verdeutlicht, dass die Auflösung mit schwacher Nebenbedingung auch bei einer stationären Mehrwegeausbreitung von Vorteil ist. Das in Figur 7 dargestellte Diagramm wurde erstellt, indem die Auflösung der Phasenmehrdeutigkeit in Anwesenheit eines zur Mehrwegeausbreitung äquivalenten Instrumentenfehlers mit der angegebenen Standardabweichung der mittelwertfreien Gaußschen Verteilung simuliert worden ist.

Mit dem hier beschriebenen Verfahren besteht die Möglichkeit, die Last 7 zu stabilisieren, indem der Abstandsvektor 15 zwischen den beiden Empfängern 10 und 11 bestimmt wird. Im Gegensatz zu herkömmlichen Verfahren ist dies auch bei Seillängen unterhalb 100 Meter möglich.

Neben reinen Phasenkombinationen können auch Code- und Phasenkombinationen verwendet werden, zum Beispiel eine optimierte E1-E5-Linearkombination mit einer kombinierten Wellenlänge von 3.285 m, einem Rauschpegel im Bereich von wenigen Zentimetern und einer Unterdrückung der Mehrwegefehler von 12,6 dB.

Ferner sei angemerkt, dass die Phasenmessungen auch Differenz- oder Doppeldifferenzmessungen sein können.

Das hier beschriebene Verfahren dient dazu, jeweils nur einen Relativabstand zu bestimmen. Bei einer abgewandelten Ausführungsform werden mehrere Relativabstände zwischen mehreren stationären oder auf dem Lastenträger befestigten Empfängern und einem weiteren Empfänger im Bereich der schwebenden Last bestimmt. Aufgrund der ermittelten Relativabständen und der bekannten Relativposition der stationären oder auf dem Lastenträger befestigten Empfängern kann dann die Position der Empfänger durch Triangulation auf Konsistenz überprüft oder die Fehler herausgemittelt werden.

Abschließend sei noch darauf hingewiesen, dass Merkmale und Eigenschaften, die im Zusammenhang mit einem bestimmten Ausführungsbeispiel beschrieben worden sind, auch mit einem anderen Ausführungsbeispiel kombiniert werden können, außer wenn dies aus Gründen der Kompatibilität ausgeschlossen ist. Schließlich wird noch darauf hingewiesen, dass in den Ansprü chen und in der Beschreibung der Singular den Plural einschließt, außer wenn sich aus dem Zusammenhang etwas anderes ergibt. Insbesondere wenn der unbestimmte Artikel verwendet wird, ist sowohl der Singular als auch der Plural gemeint.

**Patentansprüche**

1. Verfahren zur Bestimmung der Relativpositionen zwischen zwei Empfängern (10, 11) für die Satellitennavigation, bei dem von den Empfängern (10, 11) Phasenmessungen an Trägersignalen (4) des Satellitennavigationssystems (1) durchgeführt werden und von einer Auswerteeinheit (14) anhand der Phasenmessungen die Relativposition der Empfänger (10, 11) bestimmt wird,
   **dadurch gekennzeichnet, dass**

   - von der Auswerteeinheit (14) die ganzzahligen Phasenmehrdeutigkeiten und der die Relativposition beschreibende Abstandsvektor (15) bestimmt werden, indem
   - eine Bewertungsfunktion minimiert wird, die neben einem ersten Maß zur Bewertung der Konsistenz der ganzzahligen Phasenmehrdeutigkeiten mit den Phasenmessungen ein zweites Maß beinhaltet, durch das die Abweichung des die Relativposition beschreibenden und den ganzzahligen Phasenmehrdeutigkeiten zugeordneten Abstandsvektors (15) von einem Abstandsvektor vorbestimmter Länge bestimmt wird.

2. Verfahren nach Anspruch 1,

   - bei dem zunächst die reellwertigen Phasenmehrdeutigkeiten bestimmt werden und dann die ganzzahligen Phasenmehrdeutigkeiten und der die Relativposition beschreibende Abstandsvektor (15) bestimmt werden, indem die Bewertungsfunktion optimiert wird,
   - bei dem das erste Maß zur Bewertung der ganzzahligen Phasenmehrdeutigkeiten eine Norm beinhaltet, mit der die Abweichung der reellwertigen Phasenmehrdeutigkeiten von den ganzzahligen Phasenmehrdeutigkeiten bestimmt wird und
   - bei dem das zweite Maß eine Norm umfasst, mit der die Abweichung des den ganzzahligen Phasenmehrdeutigkeiten zugeordneten Abstandsvektors von dem Abstandsvektor vorbestimmter Länge bestimmt wird.

3. Verfahren nach Anspruch 2,

   - bei dem der Abstandsvektor vorbestimmter Länge bestimmt wird, indem mit Hilfe einer Suchbewertungsfunktion derjenige Abstandsvektor gesucht wird, der eine vorbestimmte Länge aufweist und den geringsten Abstand zu dem den ganzzahligen Phasenmehrdeutigkeiten zugeordneten Abstandsvektors aufweist.

4. Verfahren nach Anspruch 3, bei dem die Suchbewertungsfunktion eine Lagrangefunktion ist und/oder bei dem die Bewertungsfunktion gegeben ist durch:

$$g(\boldsymbol{N}, \boldsymbol{\xi}_\lambda) = \left\| \hat{\boldsymbol{N}} - \boldsymbol{N} \right\|^2_{\Sigma_{\hat{N}}^{-1}} + \min_{\xi_\lambda(N), \|\xi_\lambda(N)\| = l} \left\| \breve{\boldsymbol{\xi}}(\boldsymbol{N}) - \boldsymbol{\xi}_\lambda(\boldsymbol{N}) \right\|^2_{\Sigma_{\breve{\xi}(N)}^{-1}}$$

und bei dem die Suchbewertungsfunktion gegeben ist durch:

$$f(\lambda) = \left\| \breve{\boldsymbol{\xi}}(\boldsymbol{N}) - \boldsymbol{\xi}_\lambda(\boldsymbol{N}) \right\|^2_{\Sigma_{\breve{\xi}(N)}^{-1}} + \lambda \left( \left\| \xi_\lambda(\boldsymbol{N}) \right\|^2 - l^2 \right)$$

mit:

$N$ : dem Vektor der ganzzahligen Phasenmehrdeutigkeiten, für die die Bewertungsfunktion optimiert wird,

$\underset{\lambda}{\xi}(N)$: dem gesuchten Abstandsvektor,

$\breve{N}$: dem Vektor der geschätzten reellwertigen Phasenmehrdeutigkeiten,

$$\breve{\xi}(N):$$ dem anhand von $N$ geschätzten Abstandsvektor

$l$: der vorbekannten Länge des gesuchten Abstandsvektors (15),

$\lambda$: dem Lagrangefaktor und

$\Sigma$: den jeweiligen Kovarianzmatrizen

5.  Verfahren nach Anspruch 1,

- bei dem das erste Maß zur Bewertung der ganzzahligen Phasenmehrdeutigkeiten eine Norm umfasst, durch die die Abweichungen von berechneten Phasenwerten, die anhand der ganzzahligen Phasenmehrdeutigkeiten und dem Abstandsvektor berechnet worden sind, von gemessenen Phasenwerten bestimmt wird, die mit den Code- und Phasenmessungen erfasst worden sind, und

- bei dem das zweite Maß die Abweichung einer Norm des Abstandsvektors von einer vorbestimmten Länge bestimmt.

6.  Verfahren nach Anspruch 5,
bei dem das erste Maß mit dem zweiten Maß über einen Koppelparameter verbunden ist, durch den der Einfluss des zweiten Maßes auf die Bestimmung der ganzzahligen Phasenmehrdeutigkeiten und des Abstandsvektors eingestellt wird und/oder bei dem die Bewertungsfunktion gegeben ist durch:

$$J(\xi, N) = \left\| \Psi - H\xi - AN \right\|_{\Sigma^{-1}}^{2} + \mu \cdot \left( \left\| \xi \right\| - l \right)^{2}$$

mit:

$N$: dem Vektor der ganzzahligen Phasenmehrdeutigkeiten, für die die Bewertungsfunktion optimiert wird,

$\xi$: dem gesuchten Abstandsvektor,

$\Psi$: dem Vektor der Messwerte

$H$: der Geometriematrix

$A$: der Wellenlängenmatrix,

$\mu$: dem Koppelfaktor

$l$: der vorbekannten Länge des gesuchten Abstandsvektors (15) und

$\Sigma$: der jeweiligen Kovarianzmatrix

7.  Verfahren nach einem der Ansprüche 1 bis 6,
bei dem die Bewertungsfunktion wiederholt für verschiedene ganzzahlige Phasenmehrdeutigkeiten ausgewertet wird.

8.  Verfahren nach Anspruch 7,
bei dem die auszuwertenden Phasenmehrdeutigkeiten mit Hilfe eines Suchbaums gesucht werden, dessen Zweige Reihen von Phasenmehrdeutigkeiten entsprechen und bei dem Suchbaumzweige mit einer Phasenmehrdeutigkeit oder einer Länge des Abstandsvektors außerhalb von Wahrscheinlichkeitsgrenzen ausgeschlossen werden.

9.  Verfahren nach Anspruch 8,
bei dem die Wahrscheinlichkeitsgrenzen durch die Fehlernorm der Schätzung der reellwertigen Phasenmehrdeutigkeiten bestimmt ist und ein Zweig des Suchbaums nur dann weiterverfolgt wird, wenn die Differenz zwischen der geschätzten Länge des Abstandsvektors (15) und dessen vorbekannter Wert kleiner als die Standardabweichung der Längenschätzung des Abstandsvektors (15) multipliziert mit einem Faktor ist.

10. Verfahren nach einem der Ansprüche 1 bis 9,
bei dem wenigstens eine Linearkombination von Phasenmessungen verwendet wird und bei dem durch Auswertung der Bewertungsfunktion die Phasenmehrdeutigkeiten der Linearkombination und der Abstandsvektor gesucht werden.

**11.** Verfahren nach Anspruch 10,
bei dem durch die wenigstens eine geometrie-erhaltende Linearkombination die Wellenlänge der Phasenmessungen vergrößert wird.

**12.** Verfahren nach Anspruch 11,
bei dem durch die wenigstens eine geometrie-erhaltende Linearkombination das Verhältnis von Wellenlänge zur Standardabweichung des Rauschens der Linearkombination maximiert wird.

**13.** Verfahren nach einem der Anspruch 10 bis 12,
bei dem die Linearkombinationen Codemessungen einschließen.

**14.** Vorrichtung zur Bestimmung eines Relativabstands zwischen wenigstens zwei Benutzergeräten mit:

- wenigstens zwei im Abstand angeordneten Empfängern (10, 11), die Code- und Phasenmessungen an Navigationssignalen durchführen, die die Empfänger (10, 11) von Satelliten (2) eines Satellitennavigationssystems (1) empfangen und mit
- einer Auswerteeinheit (14), mit der anhand der Code- und Phasenmessungen ein Abstandsvektor (15) zwischen den Empfängern (10, 11) zumindest näherungsweise bestimmbar ist,

**d**adurch gekennzeichnet, dass
die Empfänger (10, 11) sowie die Auswerteinheit (14) zur Ausführung des Verfahren nach einem der Ansprüche 1 bis 13 eingerichtet sind.

**15.** Verwendung der Vorrichtung nach Anspruch 14,
**dadurch gekennzeichnet , dass**
der von der Vorrichtung bestimmte Abstandsvektor als Ist-Wert für eine Regelung (15) zur Stabilisierung einer schwebenden Last (7) verwendet wird, die mit einem der beiden Empfänger (10) versehen ist und die von einer Trägervorrichtung (6), insbesondere einem Lasthubschrauber oder einem Lastkran, gehalten ist, die mit dem anderen der beiden Empfänger (11) ausgestattet ist

**Claims**

**1.** Method for determining the relative position between two receivers (10, 11) for satellite navigation , in which phase measurements on carrier signals (4) of the satellite navigation system (1) are performed by the receivers (10, 11), and in which the relative position of the receivers (10, 11) is determined by an evaluation unit (14) on the basis of the phase measurements,
**characterized in that**

- the integer phase ambiguities and the distance vector (15) describing the relative position is determined by the evaluation unit (14), by
- minimizing an evaluation function, which comprises besides a first measure for evaluating the consistency of the integer phase ambiguities with the phase measurements, a second measure, that determines the deviation of the distance vector (15), which describes the relative position and is associated with the integer phase ambiguity, from a distance vector of predetermined length.

**2.** Method according to claim 1,

- in which the real-valued phase ambiguities are initially determined and then the integer phase ambiguities and the distance vector (15) describing the relative position is determined by optimizing the evaluation function,
- in which the first measure for evaluating the integer phase ambiguities comprises a norm, that determines the deviation of the real-valued phase ambiguities from the integer phase ambiguities, and
- in which the second measure comprises a norm, which determines the deviation of the distance vector associated with the integer phase ambiguities from the distance vector of predetermined length.

**3.** Method according to claim 2,

- in which the distance vector of predetermined length is determined by searching the one distance vector, which has a predetermined length and the smallest distance to the distance vector, which is associated with the integer phase ambiguities, by means of a search evaluation function.

**4.** Method according to claim 3,
in which the search evaluation function is a Lagrange function and/or
in which the evaluation function is given by:

$$g(\boldsymbol{N},\boldsymbol{\xi}_\lambda) = \left\|\hat{\boldsymbol{N}} - \boldsymbol{N}\right\|^2_{\Sigma^{-1}_{\hat{N}}} + \min_{\xi_\lambda(\boldsymbol{N}),\|\xi_\lambda(\boldsymbol{N})\|=l} \left\|\breve{\boldsymbol{\xi}}(\boldsymbol{N}) - \boldsymbol{\xi}_\lambda(\boldsymbol{N})\right\|^2_{\Sigma^{-1}_{\breve{\xi}(N)}}$$

and in which the search evaluation function is given by:

$$f(\lambda) = \left\|\breve{\boldsymbol{\xi}}(\boldsymbol{N}) - \boldsymbol{\xi}_\lambda(\boldsymbol{N})\right\|^2_{\Sigma^{-1}_{\breve{\xi}(N)}} + \lambda\left(\left\|\xi_\lambda(\boldsymbol{N})\right\|^2 - l^2\right)$$

with:

$\boldsymbol{N}$ : the vector of the integer phase ambiguities, for which the evaluation function is optimized,
$\xi_\lambda(\boldsymbol{N})$: the searched distance vector,
$\hat{\boldsymbol{N}}$ : the vector of the estimated real-valued phase ambiguities,
$\breve{\boldsymbol{\xi}}(\boldsymbol{N}) :$ the distance vector estimated on the basis of on $\boldsymbol{N}$
$l$: the previously known length of the searched distance vector (15),
$\lambda$: the Lagrange factor and
$\Sigma$: the respective covariance matrixes.

**5.** Method according to claim 1,

- in which the first measure for evaluating the integer phase ambiguities comprises a norm that determines the deviation of calculated phase values, which have been calculated based on integer phase ambiguities and the distance vector, from measured phase values, which have been detected by code and phase measurements, and
- in which the second measure determines the deviation of a norm of the distance vector from a predetermined length.

**6.** Method according to claim 5,
in which the first measure is connected to the second measure by a coupling parameter that adjusts the influence of the second measure on the determination of the integer phase ambiguities and of the distance vector and/or
in which the evaluation function is given by:

$$J(\boldsymbol{\xi}, \boldsymbol{N}) = \left\|\Psi - \boldsymbol{H}\boldsymbol{\xi} - \boldsymbol{A}\boldsymbol{N}\right\|^2_{\Sigma^{-1}} + \mu \cdot (\|\xi\| - l)^2$$

with:

$\boldsymbol{N}$ : the vector of the integer phase ambiguities, for which the evaluation function is optimized,
$\xi$ : the searched distance vector,
$\Psi$ : the vector of the measured values
$\boldsymbol{H}$ : the geometry matrix
$\boldsymbol{A}$ : the wavelength matrix,
$\mu$ : the coupling factor
$l$ : the predetermined length of the searched distance vector (15) and
$\Sigma$ : the respective covariance matrix.

**7.** Method according to any one of the claims 1 to 6,

in which the evaluation function is repeatedly evaluated for various integer phase ambiguities.

8. Method according to claim 7,
in which the phase ambiguities to be evaluated are searched by means of a search tree, whose branches correspond to series of phase ambiguities and in which search tree branches with a phase ambiguity or a length of the distance vector beyond probability limits are excluded.

9. Method according to claim 8,
in which the probability limits are determined by the error norm of the estimation of the real-valued phase ambiguities, and in which a branch of the search tree is only prosecuted, if the difference between the estimated length of the distance vector (15) and its previously known value is smaller than the standard deviation of the length estimation of the distance vector (15) multiplied by a factor.

10. Method according to any one of claims 1 to 9,
in which at least one linear combination of phase measurements is used, and in which the phase ambiguities of the linear combination and the distance vector are searched by evaluating the evaluation function.

11. Method according to claim 10,
in which the wavelength of the phase measurements is increased by at least one geometry preserving linear combination.

12. Method according to claim 11,
in which the ratio of the wavelength to the standard deviation of the noise of the linear combination is maximized by the at least one geometry preserving linear combination.

13. Method according to any one of claims 10 to 12,
in which the linear combination includes code measurements.

14. Apparatus for determining a relative position between at least two user devices comprising:

- at least two receivers (10, 11) which are disposed at a distance and which perform code and phase measurements on navigation signals, which the receivers (10, 11) receive from satellites (2) of a satellite navigation system (1), and
- an evaluation unit (14), which can determine at least approximately a distance vector (15) between the receivers (10, 11) on the basis of the code and phase measurements,

**characterized in that**
the receivers (10, 11) and the evaluation unit (14) are arranged for performing the method according to any one of the claims 1 to 13.

15. Use of the apparatus according to claim 14,
**characterized in that**
the distance vector determined by the apparatus is used as actual value for a control unit (15) for stabilizing a suspended load (7), which is provided with one of both receivers (10) and which is held by a carrier apparatus (6), particularly by a cargo helicopter or a cargo crane, which is provided with the other one of both receivers (11) .


**Revendications**

1. Procédé de détermination des positions relatives entre deux récepteurs (10, 11) pour la navigation par satellite, lors duquel des mesures de phase sur des signaux porteurs (4) du système de navigation par satellite (1) sont réalisées par les récepteurs (10, 11) et la position relative des récepteurs (10, 11) est déterminée par un module d'évaluation (14) à l'aide des mesures de phase,
**caractérisé en ce que**

- les ambiguïtés de phase entières et le vecteur de distance (15) décrivant la position relative sont déterminés par le module d'évaluation (14) **en ce que**
- une fonction d'estimation est minimisée, laquelle contient outre une première mesure pour l'estimation de la consistance des ambiguïtés de phase entières avec les mesures de phase une seconde mesure par laquelle l'écart du vecteur de distance (15) décrivant la position relative et associé aux ambiguïtés de phase entières d'un vecteur de distance de longueur prédéterminée est déterminé.

2.  Procédé selon la revendication 1,

    - lors duquel les ambiguïtés de phase de valeur réelle sont d'abord déterminées, puis les ambiguïtés de phase entières et le vecteur de distance (15) décrivant la position relative sont déterminés en ce que la fonction d'estimation est optimisée,
    - lors duquel la première mesure pour l'estimation des ambiguïtés de phase entières contient une norme avec laquelle l'écart des ambiguïtés de phase de valeur réelle des ambiguïtés de phase entières est déterminé, et
    - lors duquel la seconde mesure comprend une norme avec laquelle l'écart du vecteur de distance associé aux ambiguïtés de phase entières du vecteur de distance de longueur prédéterminée est déterminé.

3.  Procédé selon la revendication 2,

    - lors duquel le vecteur de distance de longueur prédéterminée est déterminé en ce que le vecteur de distance qui présente une longueur prédéterminée et présente la plus faible distance par rapport au vecteur de distance associé aux ambiguïtés de phase entières est recherché à l'aide d'une fonction d'estimation de recherche.

4.  Procédé selon la revendication 3,
    lors duquel la fonction d'estimation de recherche est une fonction de Lagrange et/ou
    lors duquel la fonction d'estimation est donnée par :

$$g(N, \xi_\lambda) = \left\| \hat{N} - N \right\|^2_{\Sigma_{\hat{N}}^{-1}} + \min_{\xi_\lambda(N), \|\xi_\lambda(N)\|=l} \left\| \breve{\xi}(N) - \xi_\lambda(N) \right\|^2_{\Sigma_{\breve{\xi}(N)}^{-1}}$$

et lors duquel la fonction d'estimation de recherche est donnée par :

$$f(\lambda) = \left\| \breve{\xi}(N) - \xi_\lambda(N) \right\|^2_{\Sigma_{\breve{\xi}(N)}^{-1}} + \lambda \left( \left\| \xi_\lambda(N) \right\|^2 - l^2 \right)$$

avec :

$N$ : le vecteur des ambiguïtés de phase entières pour lesquelles la fonction d'estimation est optimisée,
$\xi_\lambda(N)$ : le vecteur de distance recherché,
$\hat{N}$ : le vecteur des ambiguïtés de phase de valeur réelle estimées,

$\breve{\xi}(N)$ : le vecteur de distance estimé à l'aide de $N$,
$l$ : la longueur connue au préalable du vecteur de distance recherché (15),
$\lambda$ : le facteur de Lagrange, et
$\Sigma$ : les matrices de covariance respectives.

5.  Procédé selon la revendication 1,

    - lors duquel la première mesure pour l'estimation des ambiguïtés de phase entières comprend une norme par laquelle les écarts de valeurs de phase calculées, qui ont été calculées à l'aide des ambiguïtés de phase entières et du vecteur de distance, de valeurs de phase mesurées qui ont été collectées avec les mesures de code et de phase sont déterminés, et
    - lors duquel la seconde mesure détermine l'écart d'une norme du vecteur de distance d'une longueur prédéterminée.

6.  Procédé selon la revendication 5,
    lors duquel la première mesure est reliée à la seconde mesure par le biais d'un paramètre de couplage par lequel l'influence de la seconde mesure sur la détermination des ambiguïtés de phase entières et du vecteur de distance est réglée et/ou
lors duquel la fonction d'estimation est donnée par :

$$J(\xi, N) = \left\| \Psi - H\xi - AN \right\|_{\Sigma^{-1}}^{2} + \mu \cdot \left( \left\| \xi \right\| - l \right)^{2}$$

avec :

**N** : le vecteur des ambiguïtés de phase entières pour lesquelles la fonction d'estimation est optimisée,
$\xi$ : le vecteur de distance recherché,
$\Psi$ : le vecteur des valeurs de mesure,
**H** : la matrice de géométrie,
**A** : la matrice de longueur d'onde,
$\mu$ : le facteur de couplage,
*l* : la longueur connue au préalable du vecteur de distance recherché (15), et
$\Sigma$ : la matrice de covariance respective.

7. Procédé selon une des revendications 1 à 6,
lors duquel la fonction d'estimation est évaluée de manière répétée pour différentes ambiguïtés de phase entières.

8. Procédé selon la revendication 7,
lors duquel les ambiguïtés de phase à évaluer sont recherchées à l'aide d'un arbre de recherche dont les branches correspondent à des rangées d'ambiguïtés de phase et lors duquel des branches d'arbre de recherche avec une ambiguïté de phase ou une longueur du vecteur de distance en dehors des limites de probabilité sont exclues.

9. Procédé selon la revendication 8,
lors duquel les limites de probabilité sont déterminées par la norme d'erreur de l'estimation des ambiguïtés de phase de valeur réelle et une branche de l'arbre de recherche n'est ensuite suivie que lorsque la différence entre la longueur estimée du vecteur de distance (15) et sa valeur connue au préalable est inférieure à l'écart-type de l'estimation de longueur du vecteur de distance (15) multiplié par un facteur.

10. Procédé selon une des revendications 1 à 9,
lors duquel au moins une combinaison linéaire de mesures de phase est utilisée et lors duquel les ambiguïtés de phase de la combinaison linéaire et le vecteur de distance sont recherchés par évaluation de la fonction d'estimation.

11. Procédé selon la revendication 10,
lors duquel la longueur d'onde des mesures de phase est agrandie par l'au moins une combinaison linéaire conservant la géométrie.

12. Procédé selon la revendication 11,
lors duquel le rapport de longueur d'onde sur l'écart-type du bruit de la combinaison linéaire est maximisé par l'au moins une combinaison linéaire conservant la géométrie.

13. Procédé selon une des revendications 10 à 12,
lors duquel les combinaisons linéaires incluent des mesures de code.

14. Dispositif de détermination d'une distance relative entre au moins deux appareils d'utilisateur avec :

- au moins deux récepteurs (10, 11) disposés à distance qui réalisent des mesures de code et de phase sur des signaux de navigation que les récepteurs (10, 11) reçoivent de satellites (2) d'un système de navigation par satellite (1) et avec
- un module d'évaluation (14) avec lequel un vecteur de distance (15) entre les récepteurs (10, 11) peut être déterminé au moins approximativement à l'aide des mesures de code et de phase,

**caractérisé en ce que**
les récepteurs (10, 11) ainsi que le module d'évaluation (14) sont configurés pour la réalisation du procédé selon une des revendications 1 à 13.

**15.** Utilisation du dispositif selon la revendication 14,
**caractérisée en ce que**
le vecteur de distance déterminé par le dispositif est utilisé en tant que valeur réelle pour une régulation (15) en vue de la stabilisation d'une charge suspendue (7) qui est pourvue d'un des deux récepteurs (10) et qui est maintenue par un dispositif porteur (6), notamment une grue volante ou un derrick, qui est équipé de l'autre des deux récepteurs (11).

FIG 1

# FIG 2

Flowchart:

**19** Phasenmessung → 
**20** Codemessung →

**21** Linearkombination

**22** Schätzung $\hat{N}$

**23** Eingrenzung auf Kandidaten $\check{N}$ (with κ input)

**24** Auswahl unter $\check{N}$

**25** Schätzung $\check{\xi}(\check{N})$

**26** Iterative Berechnung von λ

**27** Berechnung von $\check{\xi}_\lambda(\check{N})$

**28** Berechnen der Bewertungsfunktion für $\check{N}$ und $\check{\xi}_\lambda(\check{N})$

**29** Auswahl des optimalen $N$ und $\xi_\lambda(N)$

# FIG 3

```
            19                        20
    ┌─────────────────┐    ┌─────────────────┐
    │  Phasenmessung  │    │  Codemessung    │
    └─────────────────┘    └─────────────────┘
              │                      │
              ▼                      ▼
    ┌──────────────────────────────────────┐
    │         Linearkombination            │──── 21
    └──────────────────────────────────────┘
                      │
                      ▼
    ┌──────────────────────────────────────┐
    │         Schätzung N̂                   │──── 22
    └──────────────────────────────────────┘
                      │
                      ▼
  (κ)─▶┌──────────────────────────────────────┐
       │  Eingrenzung auf Kandidaten Ň         │──── 23
       └──────────────────────────────────────┘
                      │
                      ▼
    ┌──────────────────────────────────────┐
    │         Auswahl unter Ň               │──── 24
    └──────────────────────────────────────┘
                      │
                      ▼
    ┌──────────────────────────────────────┐
    │         Schätzung ξ̌(Ň)                │──── 25
    └──────────────────────────────────────┘
                      │
                      ▼
  (μ)─▶┌──────────────────────────────────────┐
       │  Iterative Berechnung von ξ̌_μ(Ň)      │──── 30
       │  mit Startwert ξ̌(Ň)                   │
       └──────────────────────────────────────┘
                      │
                      ▼
    ┌──────────────────────────────────────┐
    │  Berechnen der Bewertungsfunktion     │──── 28
    │  für Ň und ξ̌_μ(Ň)                      │
    └──────────────────────────────────────┘
                      │
                      ▼
    ┌──────────────────────────────────────┐
    │  Auswahl des optimalen N und ξ(N)     │──── 29
    └──────────────────────────────────────┘
```

# FIG 4

$l_{\widehat{N}_1} \le \check{N}_1 \le u_{\widehat{N}_1}$

$l_{\widehat{N}_{2|1}} \le \check{N}_2 \le u_{\widehat{N}_{2|1}}$

$l_{\widehat{N}_{2|1}} \le \check{N}_2 \le u_{\widehat{N}_{2|1}}$

$l_{\widehat{N}_{2|1}} \le \check{N}_2 \le u_{\widehat{N}_{2|1}}$

$l_{\widehat{N}_{3|1,2}} \le \check{N}_3 \le u_{\widehat{N}_{3|1,2}}$

$l_{\widehat{N}_{3|1,2}} \le \check{N}_3 \le u_{\widehat{N}_{3|1,2}}$

$l_{\widehat{N}_{3|1,2}} \le \check{N}_3 \le u_{\widehat{N}_{3|1,2}}$

$l_{\widehat{N}_{3|1,2}} \le \check{N}_3 \le u_{\widehat{N}_{3|}}$

$l_{\widehat{N}_{K|1,\dots,K-1}} \le \check{N}_K \le u_{\widehat{N}_{K|1,\dots,K-1}}$

$l_{\widehat{N}_{K|1,\dots,K-1}} \le \check{N}_K \le u_{\widehat{N}_{K|1,\dots,K-1}}$

$l_{\widehat{N}_{K|1,\dots,K-1}} \le \check{N}_K \le u_{\widehat{N}_{K|1,\dots,K-1}}$

$\check{N}_K \quad \check{N}_K \quad \check{N}_K$

## FIG 5

## FIG 6

# FIG 7

Fehlerwahrscheinlichkeit $P_{wf}$

schwache Nbdg., $\mu=100$
ohne Nebenbedingung

Standardabweichung der Mehrwegeausbreitung [m] $\quad x\ 10^{-3}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2429128 A
- EP 1972959 A1
- WO 2009125011 A

**In der Beschreibung aufgeführte Nicht-Patentliteratur**

- **SHENGLIN FAN ; KEFEI ZHANG ; FALIN WU.** Ambiguity Resolution in GPS-based Low-cost Attitude Determination. *Journal of Global Positioning Systems,* vol. 4 (1-2), 207-214
- **GIORGI G. ; TEUNISSEN P. ; VERHAGEN S.** Reducing the Time-To-Fix for Stand-Alone Single Frequency GNSS Attitude Determination. *Proc. of Intern. Techn. Meeting of the Inst. of Navigation (ION-ITM),* Januar 2010
- **TEUNISSEN, P.** Least-squares estimation of the integer ambiguities. *Invited lecture, Section IV, Theory and Methodology, IAG General Meeting,* 1993
- **TEUNISSEN, P.** The least-squares ambiguity decorrelation adjustment: a method for fast GPS ambiguity estimation. *J. of Geodesy,* 1995, vol. 70, 65-82
- **HENKEL, P.** Bootstrapping with Multi-Frequency Mixed Code Carrier Linear Combinations and Partial Integer Decorrelation in the Presence of Biases. *Proc. of the IAG Scient. Assembly,* September 2009